# EUROPÄISCHE PATENTSCHRIFT

(11) **EP 2 478 984 B1**
(45) Veröffentlichungstag und Bekanntmachung des Hinweises auf die Patenterteilung: **25.03.2015**
(21) Anmeldenummer: 11196244.5
(22) Anmeldetag: 30.12.2011
(51) Int. Cl.: B24B 47/10, B23D 47/10, B24B 27/04, F16H 7/16, B23D 47/12, B24B 27/08

(54) **Motorarbeitsgerät mit einer Spanneinrichtung für einen Riemen**
Motorised work device with a tensioning device for a belt
Appareil de travail motorisé doté d'un dispositif de serrage pour une courroie

(30) Priorität: 20.01.2011 DE 202011000143 U; 15.08.2011 DE 202011050985 U
(43) Veröffentlichungstag der Anmeldung: 25.07.2012
(73) Patentinhaber: Makita Corporation, Anjo, Aichi 446-8502 (JP)
(72) Erfinder: Döring, Manfred, 19246 Zarrentin am Schaalsee OT Neuhof (DE); Dogan, Cavit, 22159 Hamburg (DE)
(74) Vertreter: RGTH

(56) Entgegenhaltungen:
- DE-A1-102007 023 268
- DE-A1-102008 023 927
- FR-A1- 2 640 178
- US-A- 2 823 937
- US-A- 5 752 892

## Beschreibung

Die vorliegende Erfindung betrifft ein Motorarbeitsgerät mit einem Motor und mit einem durch den Motor über einen Riementrieb angetriebenen Werkzeug, wobei der Riementrieb eine in einer Antriebsachse rotierende antriebsseitige Riemenscheibe und eine in einer Werkzeugachse rotierende werkzeugseitige Riemenscheibe aufweist, und wobei über die Riemenscheiben ein Riemen spannbar ist.

### Stand der Technik

Motorarbeitsgeräte der hier interessierenden Art betreffen vorzugsweise handgehaltene Arbeitsgeräte wie Trennschleifer oder Handkreissägen. Die Motorarbeitsgeräte besitzen einen Motor, der in einem mit einem Grundkörper des Motorarbeitsgerätes verbundenen Gehäuse aufgenommen ist. In räumlicher Trennung zum Motor weist das Motorarbeitsgerät ein Werkzeug auf, beispielsweise ein Trennschleifblatt oder ein Kreissägeblatt. Durch die räumliche Trennung zwischen dem Motor und dem Werkzeug ist ein Riementrieb vorgesehen, um die Antriebsleistung des Motors auf das Werkzeug zu übertragen. Die antriebsseitige Riemenscheibe rotiert in einer Antriebsachse und wird vom Motor angetrieben, wobei die werkzeugseitige Riemenscheibe in einer Werkzeugachse rotiert, die rotatorisch fest mit dem Werkzeug verbunden ist. Über die Riemenscheiben wird ein Riemen gespannt, sodass die werkzeugseitige Riemenscheibe von der antriebsseitigen Riemenscheibe angetrieben wird. Dabei verlaufen die Antriebsachse und die Werkzeugachse parallel beabstandet zueinander.

Um den Riemen über die Riemenscheiben spannen zu können, muss dieser unter starker Dehnung über die starr zueinander angeordneten Riemenscheiben gezogen werden. Dabei entsteht der Nachteil einer möglichen Überdehnung des Riemens. Die Folge kann eine Schädigung des Riemens sein. Grundsätzlich kann zwischen nichtelastischen und elastischen Riemen, insbesondere Rippenriemen, unterschieden werden. Zur Spannung von elastischen Riemen sind Spannvorrichtungen bekannt, die den elastischen Riemen permanent unter Spannung halten.

Beispielsweise zeigt die DE 10 2008 023 927 A1 ein Motorarbeitsgerät mit einem Motor und mit einem durch den Motor über einen Riementrieb angetriebenen Werkzeug, wobei der Riementrieb eine antriebsseitige und eine werkzeugseitige Riemenscheibe aufweist, und zwischen den Riemenscheiben ist ein Elastriemen gespannt. Dabei ist eine Spannvorrichtung vorgesehen und so ausgeführt, dass die Spannung im Elastriemen durch die Elastizität des Riemens selbst aufrechterhalten bleibt. Die Spannvorrichtung basiert auf einem Exzenternockenprinzip und muss aufwendig ausgeführt werden und ist anfällig für Fehlbedienungen, welche zum Versagen des Riementriebes und damit zum Ausfall des Motorarbeitsgerätes führen können. Insbesondere ist eine Vielzahl von einzelnen Arbeitsschritten in der richtigen Reihenfolge erforderlich, um die Spannvorrichtung derart richtig zu bedienen, dass ein Riemen entnommen und in vorgesehener Weise auch wieder gespannt werden kann.

### Offenbarung der Erfindung

Es ist daher Aufgabe der Erfindung, eine Spannvorrichtung vorzusehen, die einfach ausgeführt und einfach bedienbar ist, und durch die ein Überdehnen des elastischen Riemens verhindert ist. Insbesondere sollte der Riemen nicht unter permanenter Federbelastung stehen, beispielsweise durch eine selbstspannende Spannvorrichtung.

Diese Aufgabe wird ausgehend von einem Motorarbeitsgerät gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass zumindest eine der Riemenscheiben in eine aus ihrer aufnehmenden Achse exzentrische Anordnung bringbar ist und dass ein Montageelement vorgesehen ist, das um die Werkzeugachse drehbar aufgenommen ist und das einen Exzenter aufweist, mittels dem die Riemenscheibe durch Verdrehen des Montageelementes um die Werkzeugachse und unter Aufbringung einer Vorspannung in den Riemen in die mit der Achse konzentrische Anordnung zurückführbar ist.

Die Erfindung macht sich den Gedanken zunutze, eine Spanneinrichtung für einen Riementrieb zu schaffen, die nicht darauf beruht, den Abstand der Antriebsachse zur Werkzeugachse vorübergehend zu verändern, um den Riemen über die Riemenscheiben legen zu können. Dadurch entfällt eine aufwendige konstruktive Ausgestaltung der Spanneinrichtung, da erfindungsgemäß auf einfache Weise lediglich eine der Riemenscheiben aus ihrer konzentrischen Anordnung mit der Achse, auf der die Riemenscheibe im Betrieb des Motorarbeitsgerätes aufgenommen ist, in eine exzentrische Anordnung zu überführen. Um den Riemen zu spannen, ist lediglich ein einfaches Montageelement erforderlich, mit dem die Riemenscheibe wieder in die konzentrische Anordnung mit der Achse, auf der die Riemenscheibe aufgenommen ist, zu überführen. Ist die Riemenscheibe wieder konzentrisch mit der aufnehmenden Achse angeordnet, so weisen die beiden Riemenscheiben wieder einen starren Abstand zueinander auf. Insbesondere ist kein Federelement oder dergleichen als Bestandteil einer Spanneinrichtung vorgesehen, das den Riemen während des Betriebes des Motorarbeitsgerätes permanent unter Spannung hält. Insbesondere ist es nicht erforderlich, dass die Spannvorrichtung aufgrund der Spannung des elastischen Riemens in der Spannstellung gehalten werden muss. Daraus ergibt sich insbesondere keine fortschreitende Längung des elastischen Riemens, und der Elastriemen kann aufgrund seiner Bauart ideal eingesetzt sein, indem der Achsabstand der Riemenscheiben, über denen der Riemen betrieben wird, konstant bleibt, ohne dass diese in einer Riemenspannrichtung federbelastet sind.

Das Motorarbeitsgerät kann mit einem Ausleger ausgeführt sein, an dem das Werkzeug in der Werkzeugachse drehbar gelagert angeordnet ist. Der Ausleger bildet dabei eine starre Anordnung der Antriebsachse zur Werkzeugachse. Damit kann der Ausleger mit zwei Lagergassen ausgeführt sein, und der Ausleger kann Bestandteil des Grundkörpers des Motorarbeitsgerätes sein. Insbesondere ist der Ausleger nicht beweglich, insbesondere nicht schwenkbar oder gelenkig am Grundkörper des Motorarbeitsgerätes angeordnet, um etwa eine Spanneinrichtung zu bilden. Dadurch ergibt sich eine weitere Vereinfachung der konstruktiven Gestaltung des Grundkörpers des Motorarbeitsgerätes.

Mit weiterem Vorteil kann die Riemenscheibe, die in eine aus ihrer Achse exzentrische Anordnung bringbar ist, durch die werkzeugseitige Riemenscheibe gebildet sein. Alternativ besteht auch die Möglichkeit, dass die Riemenscheibe, die in einer aus ihrer Achse exzentrische Anordnung bringbar ist, durch die antriebsseitige Riemenscheibe gebildet werden kann, sodass das Spannen des Riemens durch eine vorübergehende exzentrische Anordnung der antriebsseitigen Riemenscheibe auch auf der Antriebsachse erfolgen kann.

Das Montageelement kann so ausgeführt sein, dass dieses um die Werkzeugachse drehbar aufgenommen ist und einen Exzenter aufweist, mittels dem die Riemenscheibe durch Verdrehen des Montageelementes um die Werkzeugachse insbesondere unter Aufbringung einer Vorspannung in den Riemen in die konzentrische Anordnung mit der Werkzeugachse zurückführbar ist. Die Riemenscheibe kann auf der Werkzeugachse mit einer Zentralschraube an der Werkzeugachse befestigt sein. Wird die Zentralschraube gelöst, so nimmt die Riemenscheibe eine bewegliche Anordnung auf der Werkzeugachse an. Ebenfalls kann das Montageelement durch Lösen der Zentralschraube auf der Werkzeugachse verdreht werden. Durch den am Montageelement vorhandenen Exzenter kann die Riemenscheibe zwischen der exzentrischen Anordnung und der konzentrischen Anordnung mit der Werkzeugachse hin- und herbewegt werden. Soll ein Riemen auf den Riementrieb aufgespannt werden, so wird die Zentralschraube gelöst, und die Riemenscheibe wird auf der Werkzeugachse durch Verdrehen des Montageelementes in eine Position exzentrisch zur Werkzeugachse überführt. Anschließend kann der Riemen aufgelegt werden, und durch Verdrehen des Montageelementes wird die Riemenscheibe wieder in die konzentrische Anordnung mit der Achse überführt.

Um eine Beweglichkeit der Riemenscheibe zwischen der exzentrischen und der konzentrischen Anordnung zur aufnehmenden Achse zu ermöglichen, weist die Riemenscheibe ein Langloch auf, durch das sich die Werkzeugachse hindurch erstreckt. Damit kann die Riemenscheibe zwischen der exzentrischen Anordnung und der konzentrischen Anordnung unter Verlagerung der Werkzeugachse im Langloch in einer Riemenspannrichtung bewegt werden. Die Riemenspannrichtung erstreckt sich dabei in Richtung zur Antriebsachse. Dadurch wird der Abstand der beiden Riemenscheiben entsprechend verändert, und der Abstand der beiden Riemenscheiben ist verkleinert, wenn die Riemenscheibe auf der Antriebsachse in die exzentrische Anordnung überführt ist, und der Abstand wird wieder vergrößert, wenn die Werkzeugachse durch Verdrehen des Montageelementes wieder in die konzentrische Anordnung mit der Rotationsachse der Riemenscheibe überführt wird. Der Abstand, den die beiden Riemenscheiben zueinander einnehmen, wenn die Riemenscheibe wieder konzentrisch zur Werkzeugachse angeordnet ist, entspricht dabei dem Betriebsabstand des Riementriebes bei Betrieb des Motorarbeitsgerätes.

Mit weiterem Vorteil kann in der Riemenscheibe eine Druckfläche eingebracht sein, gegen die der Exzenter zur Anlage bringbar ist. Das Montageelement kann als plattenförmige Konturscheibe mit einer Achsbohrung ausgeführt sein, und die Riemenscheibe kann eine Vertiefung aufweisen, in die das plattenförmige Montageelement eingesetzt werden kann. Damit kann das Montageelement gemeinsam mit der Riemenscheibe auf einem Achskörper der Werkzeugachse aufgenommen und mit der Zentralschraube gesichert werden. Liegt das mit dem Exzenter konturierte Montageelement in der Riemenscheibe ein, so kann die Kontur des Exzenters des Montageelementes gegen die Druckfläche der Riemenscheibe andrücken, und die Druckfläche ist innenseitig in der Riemenscheibe angebracht. Wird das Montageelement relativ zur Riemenscheibe auf dem Achskörper der Werkzeugachse verdreht, so verändert sich der Abstand des Berührungspunktes der Kontur des Exzenters mit der Druckfläche zur Werkzeugachse. Damit kann die Riemenscheibe zwischen der konzentrischen und der exzentrischen Anordnung zur Werkzeugachse zur entsprechenden Desachsierung verlagert werden.

Damit sich die Riemenscheibe bei einer Verdrehung des Montageelementes nicht mitdreht, sind Mittel vorgesehen, durch die die Riemenscheibe um die Werkzeugachse rotatorisch blockierbar ist, sodass eine Verdrehung des Montageelementes um die Werkzeugachse relativ zur Riemenscheibe ermöglicht ist. Die Mittel können durch ein Loch in der Riemenscheibe und ein Langloch im Ausleger gebildet sein, wobei durch das Loch und durch das Langloch ein Bolzen hindurchführbar ist. Ebenso ist eine umgekehrte Ausführung möglich, bei der nämlich das Langloch in der Riemenscheibe und das Loch im Ausleger ausgebildet ist. Ist der Bolzen durch das Loch in der Riemenscheibe hindurchgeführt, so bildet der Bolzen eine Art Führungselement, das im Langloch des Auslegers geführt wird. Das Langloch im Ausleger erstreckt sich dabei in seiner Richtung zwischen der Antriebsachse und der Werkzeugachse, um die entsprechende Verlagerung der Riemenscheibe zum Verkleinern des Abstandes der beiden Riemenscheiben zueinander zu ermöglichen.

Wird nun das Montageelement verdreht, und wandert die Kontur des Exzenters an der Druckfläche der Riemenscheibe entlang, wird die Riemenscheibe in Riemenspannrichtung bewegt, bis unter Verlagerung des Bolzens im Langloch schließlich die Riemenscheibe konzentrisch zur Werkzeugachse angeordnet ist. Anschließend kann die Zentralschraube im Achskörper angezogen werden, und die werkzeugseitige Riemenscheibe und das Montageelement sind durch die Zentralschraube miteinander fest verbunden. Anschließend kann der Bolzen wieder aus der Bohrung und dem Langloch entfernt werden, und die Riemenscheibe rotiert gemeinsam mit dem Montageelement um die Werkzeugachse, und das Motorarbeitsgerät kann in Betrieb genommen werden.

Das Langloch im Ausleger, durch das der Bolzen in gemeinsamer Anordnung durch das Loch in der Riemenscheibe hindurchgeführt sein kann, kann gerade oder als Bogennut mit einer Krümmung ausgeführt sein. Der Vorteil eines bogenförmig ausgeführten Langloches besteht insbesondere darin, dass die Spannkraft immer in einer Richtung mit dem Kraftangriffspunkt zwischen dem Exzenter des Montageelementes und der Druckfläche in der Riemenscheibe liegt. Dadurch wird das Überführen der Riemenscheibe von der exzentrischen Anordnung in die konzentrische Anordnung mit der Werkzeugachse weiter erleichtert.

Weiterhin kann vorgesehen sein, dass nach Zurückführung der Riemenscheibe in die konzentrische Anordnung mit der Werkzeugachse in das Langloch der Riemenscheibe ein Sicherungselement eingesetzt wird, um die Riemenscheibe in der konzentrischen Anordnung zur Werkzeugachse zu sichern. Das Sicherungselement kann eine Anformung aufweisen, die in Gestalt eines Nutensteins ausgeführt ist. Dieser Nutenstein wird bei Anordnung des Sicherungselementes planparallel auf das plattenförmige Montageelement in das Langloch, das in der Riemenscheibe vorgesehen ist, eingesetzt. Damit wird der Achskörper, der sich in das Langloch in der Riemenscheibe hinein erstreckt, in der Position gesichert, in der die Riemenscheibe konzentrisch zur Werkzeugachse angeordnet ist.

Zusätzlich oder alternativ zum Sicherungselement kann ein Sicherungsring vorgesehen sein, der bei konzentrischer Anordnung der Riemenscheibe zur Werkzeugachse auf den Achskörper der Werkzeugachse aufsetzbar und in eine in der Riemenscheibe eingebrachte Vertiefung einbringbar ist. Der Sicherungsring kann ebenfalls wie das Sicherungselement nur dann auf die Riemenscheibe und den Achskörper aufgesetzt werden, wenn sich die Riemenscheibe in konzentrischer Anordnung mit der Werkzeugachse befindet. Der Sicherungsring kann gleichermaßen wie das Sicherungselement eine Achsbohrung aufweisen, durch die sich der Achskörper der Werkzeugachse hindurch erstreckt. Der Sicherungsring kann nur dann in die Anordnung in der Vertiefung in der Riemenscheibe angeordnet werden, wenn diese in der konzentrischen Anordnung zur Werkzeugachse angeordnet ist, und somit wird durch den Sicherungsring sichergestellt, dass das Motorarbeitsgerät mit dem Riementrieb erst dann in Betrieb genommen wird, wenn das Sicherungselement beziehungsweise der Sicherungsring auf dem Achskörper angeordnet und in das Langloch beziehungsweise in die Vertiefung eingesetzt werden kann.

Eine weitere mögliche Ausführungsform zur Sicherung der Spannanordnung der Riemenscheibe kann mit einer Sicherungsschraube vorgesehen sein, mit der das Montageelement mit der Riemenscheibe verschraubbar ist, wobei zur Sicherung auch ein Splint oder ein Bolzen verwendet werden kann. Das Montageelement kann ein Langloch zur Hindurchführung der Sicherungsschraube aufweisen, das derart bemessen ist, dass die Sicherungsschraube dann durch das Langloch hindurchführbar ist, wenn der Exzenter unverschlissen ist und/oder wenn das Montageelement hinreichend gespannt ist, wobei in der Riemenscheibe vorzugsweise eine Gewindebohrung eingebracht ist, in die die Sicherungsschraube einschraubbar ist.

Das Langloch und die Gewindebohrung müssen sich dafür an wenigstens einer Position im Langloch überdecken, um die Sicherungsschraube in der Gewindebohrung einzuschrauben. Durch das Langloch wird ein Toleranzbereich geschaffen, sodass die Sicherungsschraube auch dann zur Verschraubung des Montageelementes in der Riemenscheibe in der Gewindebohrung eingeschraubt werden kann, wenn bereits ein erster, jedoch noch zulässiger Verschleiß des Exzenters des Montageelementes begonnen hat. Ist der Exzenter nicht bis zur endgültigen Spannposition in der Riemenscheibe verdreht worden, reicht die Verdrehposition zur erforderlichen Verspannung des Montageelementes in der Riemenscheibe jedoch aus, kann die Sicherungsschraube bereits ebenfalls schon durch das Langloch hindurchgeführt und in der Gewindebohrung in der Riemenscheibe verschraubt werden.

Die Anordnung der Sicherungsschraube bietet den Vorteil, dass die Riemenscheibe und das Montageelement nach dem Spannprozess und dem Festziehen der Zentralschraube formschlüssig miteinander verbunden werden können. Die Formschlussgeometrie ist dabei bereits durch die Anordnung der Sicherungsschraube zur Verschraubung des Montageelementes in der Riemenscheibe geschaffen.

Um die Formschlussgeometrie jedoch auch in Drehrichtung des Montageelementes innerhalb der Riemenscheibe zu schaffen, weisen das Montageelement und die Riemenscheibe jeweils Formschlussgeometrien auf, die formschließend ineinander bringbar sind, durch die eine Verdrehung des Montageelementes in der Riemenscheibe verhindert ist, insbesondere wenn das Montageelement mit der Riemenscheibe durch die Sicherungsschraube verschraubt ist. Beispielsweise kann die Formschlussgeometrie zwischen dem Montageelement und der Riemenscheibe erst dann ineinander greifen, wenn die Sicherungsschraube eingeschraubt ist und der Formschluss wird mit der Sicherungsschraube gesichert.

Beispielsweise kann die Formschlussgeometrie eine an der Riemenscheibe vorgesehene Rippe und vorzugsweise mehrere am Montageelement vorgesehene Rastnuten aufweisen, wobei die Rippe dann in eine der Rastnuten einrastbar ist, wenn der Exzenter unverschlissen ist und/oder wenn das Montageelement hinreichend gespannt ist. Beispielsweise kann die Rippe dann mit den Rastnuten in Überdeckung gebracht sein, wenn das Langloch in Überdeckung mit der Gewindebohrung gebracht ist, derart, dass die Sicherungsschraube durch das Langloch hindurch und in der Gewindebohrung verschraubt werden kann.

Das Montageelement kann über eine Sechskantanformung verfügen, und somit mit einem Werkzeug um die Werkzeugachse gedreht werden. Die Sicherungsschraube kann dabei mit besonderem Vorteil derart relativ zur Sechskantanformung angeordnet sein, dass das Werkzeug nicht mit der Sechskantanformung in Wirkverbindung bringbar ist, wenn die Sicherungsschraube das Montageelement mit der Riemenscheibe verschraubend angeordnet ist. Insbesondere kann der Abstand zwischen der Sechskantanformung und der Sicherungsschraube so gering sein, dass das Werkzeug an der Sechskantanformung nicht ansetzbar ist. Insbesondere soll die Montage mit dem dem Motorarbeitsgerät beigelegten Bordwerkzeug ausführbar sein, was zur Folge hat, dass eine Arretierung für einen Schlitzschraubendreher eines Kombischlüssels im Kurbelgehäuse und eine Führung im Montageelement vorzusehen ist, damit beispielswiese mit einem Torx die Sicherungsschraube festzuziehen ist, ohne das Montageelement in der Riemenscheibe zu verdrehen. Folglich muss der Bolzen erst aus dem Loch in der Riemenscheibe und dem Langloch im Ausleger herausgenommen werden, um anschließend die Sicherungsschraube bedienen zu können, da sowohl der Torx- Schlüsselansatz als auch der den Bolzen bildenden Bereich des Werkzeugs zur Verdrehsicherung der Riemenscheibe im Ausleger als einteiliges Werkzeug ausgeführt ist.

Um die Kontrolle über die erforderliche Spannposition des Montageelementes in der Riemenscheibe weiter zu verbessern, kann an der Riemenscheibe ein Markierungspfeil und am Montageelement ebenfalls ein Markierungspfeil angeordnet sein, wobei die Markierungspfeile bei einem Verdrehen des Montageelementes in der Riemenscheibe jeweils für einen Bediener sichtbar sind. Die Markierungspfeile können durch ein Verdrehen des Montageelementes um die Werkzeugachse in der Riemenscheibe aufeinander zu bewegt werden, indem das Montageelement die Drehbewegung in der Riemenscheibe ausführt. Dann, wenn eine optimale Verspannung des Montageelementes in der Riemenscheibe erreicht ist, können die Markierungspfeile aufeinander zuzeigen.

Die Aufgabe der vorliegenden Erfindung wird ferner gelöst durch eine Riemenscheibe eines Riementriebes für ein Motorarbeitsgerät, wobei der Riementrieb eine in einer Antriebsachse rotierende antriebsseitige Riemenscheibe und eine in einer Werkzeugachse rotierende werkzeugseitige Riemenscheibe aufweist, wobei vorgesehen ist, dass die Riemenscheibe ein Langloch aufweist, durch das eine Achse hindurchführbar ist, auf der die Riemenscheibe aufnehmbar und entlang des Langloches auf der Achse zwischen einer exzentrischen und einer konzentrischen Anordnung verstellbar ist, und wobei die Riemenscheibe ein Montageelement umfasst, das um die Werkzeugachse drehbar aufnehmbar ist und das einen Exzenter aufweist, mittels dem die Riemenscheibe durch Verdrehen des Montageelementes um die Werkzeugachse zwischen der exzentrischen und der konzentrischen Anordnung verstellbar ist. Die voranstehend für das Motorarbeitsgerät angegebenen Vorteile finden auf die erfindungsgemäße Riemenscheibe gleichermaßen Anwendung.

Die Aufgabe der vorliegenden Erfindung wird weiterhin gelöst durch ein Verfahren zur Montage eines Riemens eines Riementriebes zwischen einem Motor und einem Werkzeug eines Motorarbeitsgerätes, wobei der Riementrieb eine in einer Antriebsachse rotierende antriebsseitige Riemenscheibe und eine in einer Werkzeugachse rotierende werkzeugseitige Riemenscheibe aufweist, wobei das Verfahren wenigstens die folgenden Schritte aufweist: Überführen wenigstens einer der Riemenscheiben aus einer konzentrischen Anordnung mit der Achse, auf der die Riemenscheibe aufgenommen ist, in eine exzentrische Anordnung; Auflegen des Riemens auf die Riemenscheiben und Rückführen der Riemenscheibe in die mit der Achse konzentrische Anordnung, wobei eine Vorspannung in den Riemen eingebracht wird, wofür ein Montageelement um die Achse drehbar aufgenommen ist, welches einen Exzenter aufweist, wobei das Montageelement um die Achse verdreht wird, sodass die Riemenscheibe durch den Exzenter in die konzentrische Anordnung mit der Achse überführt wird.

Für das erfindungsgemäße Verfahren kann weiterhin vorgesehen sein, dass die Riemenscheibe ein Langloch aufweist, durch das sich die Achse hindurch erstreckt, sodass die Riemenscheibe zwischen der exzentrischen Anordnung und der konzentrischen Anordnung unter Verlagerung der Achse im Langloch in eine Riemenspannrichtung bewegt wird, wenn das Montageelement um die Achse verdreht wird. Mit weiterem Vorteil können Mittel verwendet werden, durch die die Riemenscheibe um die Achse blockiert wird, sodass das Montageelement um die Achse und relativ zur Riemenscheibe verdreht wird.

Gemäß einer vorteilhaften Weiterbildung des Verfahrens kann eine Sicherungsschraube bereitgestellt werden, mit der das Montageelement mit der Riemenscheibe verschraubt wird, wobei die Sicherungsschraube dann verschraubt wird, wenn das Montageelement in die vorgesehene Spannposition gebracht ist und sich die Riemenscheibe in der mit der Achse konzentrischen Anordnung befindet.

Damit ergibt sich ein Verfahrensablauf zum Spannen des Riemens, der mit einer gelösten Zentralschraube beginnt. In diesem Stadium des Spannvorgangs ist die Sicherungsschraube noch nicht zwischen dem Montageelement und der Riemenscheibe eingeschraubt. Damit kann mit dem Verdrehen des Montageelementes in der Riemenscheibe begonnen werden, während der Exzenter gegen die Druckfläche in der Riemenscheibe abgleitet. Die Verdrehung des Montageelementes in der Riemenscheibe erfolgt mit einem Gesamtverdrehwinkel, der dann erreicht ist, wenn der Exzenter in seiner Endposition gegen die Druckfläche in der Riemenscheibe anliegt.

Im Montageelement ist ein Langloch eingebracht, und in der Riemenscheibe ist eine Gewindebohrung vorhanden. In der Sollposition zur Spannung des Riemens befindet sich das Langloch in Überdeckung mit der Gewindebohrung, und die Sicherungsschraube kann durch das Langloch hindurch geführt und in der Gewindebohrung verschraubt werden. Dabei kann sich insbesondere sowohl am Montageelement als auch an der Riemenscheibe jeweils ein Markierungspfeil befinden, die in der gewünschten Spannposition jeweils aufeinander zuzeigen. Damit ist für einen Bediener die Sicherheit gegeben, die erforderliche Spannposition des Montageelementes in der Riemenscheibe erreicht zu haben. Anschließend kann die Zentralschraube zur Verschraubung der Riemenscheibe am Achskörper der werkzeugseitigen Lageranordnung festgezogen werden. Erst nach Beendigung des Spannprozesses und Festziehen der Zentralschraube kann die Sicherungsschraube zwischen dem Montageelement und der Riemenscheibe angeordnet und festgeschraubt werden. Dazu kann der Bediener das Werkzeug, mit dem das Montageelement in der Riemenscheibe verdreht wird und auf die Sechskantanformung des Montageelementes passt, entnommen werden, um anschließend mit dem Bolzen, an dem endseitig beispielhaft ein Torx- Schlüssel angeformt ist, kann die Sicherungsschraube verschraubt werden. Der Spannprozess wird beendet, indem ein Deckelelement auf den Ausleger angeordnet wird, der den Riemenantrieb vollständig abdeckt.

Die Merkmale und Vorteile, die voranstehend für das erfindungsgemäße Motorarbeitsgerät dargelegt sind, finden für das erfindungsgemäße Verfahren zur Montage des Riemens des Riementriebes gleichermaßen Anwendung.

### Kurze Beschreibung der Zeichnungen

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt in rein schematischer Darstellung:
Figur 1 ein Ausführungsbeispiel eines Motorarbeitsgerätes in einer perspektivischen Ansicht mit einem erfindungsgemäßen Riementrieb zwischen einem Motor und einem Werkzeug,
Figur 2a den Riementrieb mit einer antriebsseitigen Riemenscheibe, die konzentrisch mit einer Antriebsachse angeordnet ist, und mit einer werkzeugseitigen Riemenscheibe, die zur Werkzeugachse exzentrisch angeordnet ist, um den Riemen auf die Riemenscheiben aufzulegen,
Figur 2b die Anordnung des Riementriebes gemäß Figur 2a, wobei die werkzeugseitige Riemenscheibe bereits in Richtung zur konzentrischen Anordnung mit der Werkzeugachse bewegt wurde,
Figur 2c die Anordnung des Riementriebes gemäß den Figuren 2a und 2b, wobei sowohl die antriebsseitige Riemenscheibe auf der Antriebsachse als auch die werkzeugseitige Riemenscheibe auf der Werkzeugachse konzentrisch angeordnet sind, sodass der Riementrieb in Betrieb genommen werden kann,
Figur 3a eine perspektivische Ansicht einer Riemenscheibe mit einem Langloch, sodass die Riemenscheibe zwischen einer exzentrischen und einer konzentrischen Anordnung relativ zur aufnehmenden Achse bewegt werden kann,
Figur 3b eine weitere perspektivische Ansicht der Riemenscheibe gemäß Figur 3a,
Figur 4 eine perspektivische Ansicht eines Montageelementes gemäß der vorliegenden Erfindung,
Figur 5 eine perspektivische Ansicht eines Sicherungsringes,
Figur 6 eine perspektivische Ansicht einer Riemenscheibe, die konzentrisch zur Achse angeordnet ist, in der die Riemenscheibe aufgenommen ist,
Figur 7 eine quergeschnittene Ansicht der Anordnung der werkzeugseitigen Riemenscheibe auf der Werkzeugachse mit einem Ausleger und einem Deckelelement,
Figur 8 ein weiteres Ausführungsbeispiel einer Riemenscheibe mit einem Langloch, das als Bogennut mit einer Krümmung ausgeführt ist,
Figur 9 eine perspektivische Ansicht eines Sicherungselementes,
Figur 10 eine perspektivische Ansicht einer Lageranordnung zur drehbaren Aufnahme eines Achskörpers, der die Aufnahmeachse zur Aufnahme des Werkzeugs bildet und in der Werkzeugachse rotierbar ist,
Figur 11 ein weiteres Ausführungsbeispiel einer Spannradvorrichtung mit einem in einer Riemenscheibe aufgenommenen Montageelement,
Figur 12 das Ausführungsbeispiel der Spannradvorrichtung gemäß Fig. 11 mit einem um die Werkzeugachse verdrehten Montageelement,
Figur 13 das Ausführungsbeispiel der Spannradvorrichtung gemäß Fig. 11 und Fig. 12 mit einem Montageelement, das in eine Montageendposition gedreht ist,
Fig. 14 das Ausführungsbeispiel der Spannradvorrichtung gemäß Fig. 11 bis Fig. 13 mit einer Sicherungsschraube zur Sicherung der Verdrehposition des Montageelementes an der Riemenscheibe,
Fig. 15 eine Rückansicht der Riemenscheibe mit dem Montageelement,
Fig. 16 eine weitere perspektivische Ansicht der Riemenscheibe zur Anordnung eines Montageelementes gemäß Fig. 11,
Fig. 17 eine perspektivische Ansicht des Montageelementes von der Seite, die in Anordnung an der Riemenscheibe auf diese zuweist und
Fig. 18 eine weitere perspektivische Ansicht der Riemenscheibe mit einem an dieser angeordneten Montageelement und mit einem Farbfeld zur Markierung der Spannlage.

### Bevorzugte Ausführungsbeispiele der Erfindung

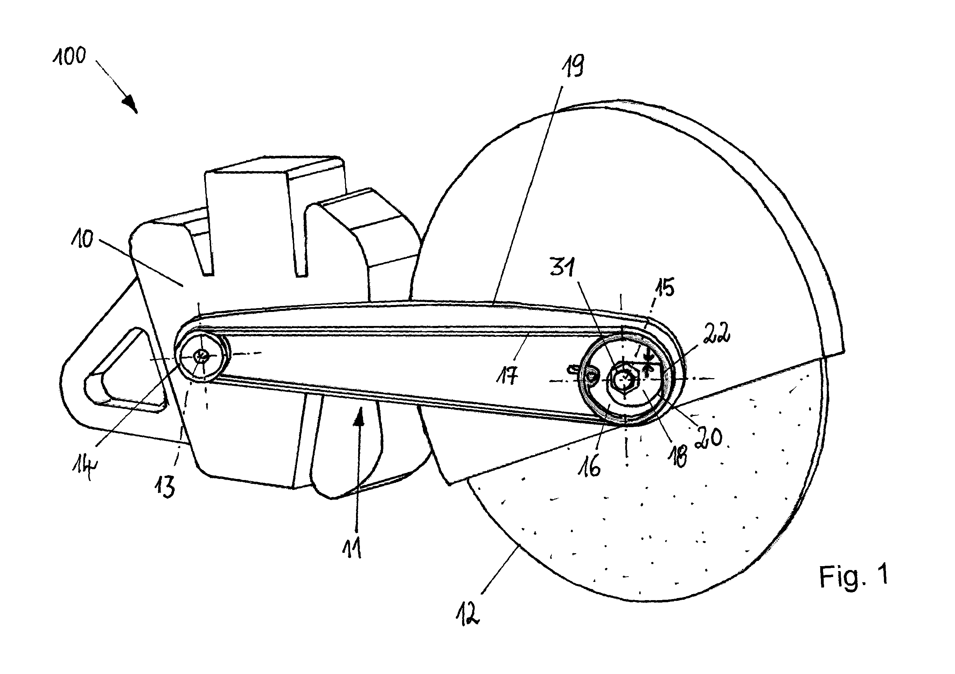

Figur 1 zeigt in einer perspektivischen Ansicht ein Ausführungsbeispiel eines Motorarbeitsgerätes 100. Das Motorarbeitsgerät kann eine handgeführte, tragbare Motorsäge oder, wie dargestellt, ein handgeführtes, tragbares Motortrennschleifgerät sein. Das Motorarbeitsgerät 100 weist einen Motor 10 auf, beispielsweise einen Hubkolbenmotor oder einen Rotationskolbenmotor. Der Motor 10 treibt eine Motorwelle an, die in einer Antriebsachse 13 rotiert, und auf der Motorwelle ist eine antriebsseitige Riemenscheibe 14 angeordnet. Am Motor 10 beziehungsweise an der Grundstruktur des Motorarbeitsgerätes 100 ist ein Ausleger 19 angeordnet, der starr ausgeführt ist und auf nicht näher dargestellte Weise Bestandteil des Grundkörpers des Motorarbeitsgerätes 100 sein kann. Am auskragenden Ende des Auslegers 19 ist in einer Werkzeugachse 15 ein Werkzeug 12 drehbar aufgenommen. Auf der Werkzeugachse 15 ist ferner eine werkzeugseitige Riemenscheibe 16 angeordnet und mit dem Werkzeug 12 so verbunden, dass ein rotierender Antrieb der werkzeugseitigen Riemenscheibe 16 das Werkzeug 12 um die Werkzeugachse 15 rotierend antreibt. Ein Riemen 17 umschlingt sowohl die antriebsseitige Riemenscheibe 14 als auch die werkzeugseitige Riemenscheibe 16, sodass die angetriebene Riemenscheibe 14 die werkzeugseitige Riemenscheibe 16 in Rotation versetzen kann. Der Riemen 17 ist als elastischer Riemen 17 ausgeführt, der auch unter der Bezeichnung Elastriemen bekannt ist.

Zur Bildung einer Spanneinrichtung ist die werkzeugseitige Riemenscheibe 16 in eine aus ihrer Achse 15 exzentrische Anordnung bringbar, wobei lediglich beispielhaft die Spanneinrichtung durch die Desachsierbarkeit der werkzeugseitigen Riemenscheibe 16 dargestellt ist, die auch mit der antriebsseitigen Riemenscheibe 14 gebildet werden kann. Durch die exzentrische Anordnung der Riemenscheibe 16 zu ihrer aufnehmenden Achse 15 kann der Abstand der beiden Riemenscheiben 14 und 16 zueinander zur Montage des Riemens 17 vorübergehend verringert werden.

Hierzu kann vorgesehen sein, eine Zentralschraube 31 zu lösen, sodass die Riemenscheibe 16 zur Montage des Riemens 17 aus der konzentrischen Anordnung mit der Werkzeugachse 15 exzentrisch verlagert werden kann. Ist der Riemen 17 über beide Riemenscheiben 14 und 16 aufgezogen, kann erfindungsgemäß ein Montageelement 18 vorgesehen sein, mit dem unter Aufbringung einer Vorspannung in den Riemen 17 die Riemenscheibe 16 wieder in die mit der Werkzeugachse 15 konzentrische Anordnung zurückführbar ist. Hierzu besitzt das Montageelement 18 einen Exzenter 20, und der Exzenter 20 kann mit seiner Exzenterkontur gegen eine Druckfläche 22 andrücken, die innenseitig in der werkzeugseitigen Riemenscheibe 16 angeordnet ist. Wird nun das Montageelement 18 um die Werkzeugachse 15 verdreht, so kann der Abstand zwischen dem Berührungspunkt des Exzenters 20 und der Druckfläche 22 und der Werkzeugachse 15 in Abhängigkeit des Verdrehungswinkels des Montageelementes 18 um die Werkzeugachse 15 wieder vergrößert werden, bis die Rotationsachse der Riemenscheibe 16 konzentrisch zur Werkzeugachse 15 angeordnet ist. Anschließend kann die Zentralschraube 31 wieder festgezogen werden, und das Montageelement 18 bildet mit der werkzeugseitigen Riemenscheibe 16 eine rotierende Einheit zum Betrieb des Riementriebs 11. Damit kann, ohne den Abstand zwischen der Antriebsachse 13 und der Werkzeugachse 15 zu verändern, der Riemen 17 auf einfache Weise über die Riemenscheiben 14 und 16 aufgespannt werden. Insbesondere kann der Ausleger 19 starr ausgeführt werden, wodurch sich eine erhebliche konstruktive Vereinfachung der Spanneinrichtung ergibt, die notwendig ist, um den Riemen 17 ohne diesen zu überdehnen auf beide Riemenscheiben 14 und 16 aufzuziehen. Insbesondere bedarf die Spanneinrichtung keiner weiteren Spannrolle, die etwa über eine Federspanneinrichtung gegen den Riemen vorgespannt wäre.

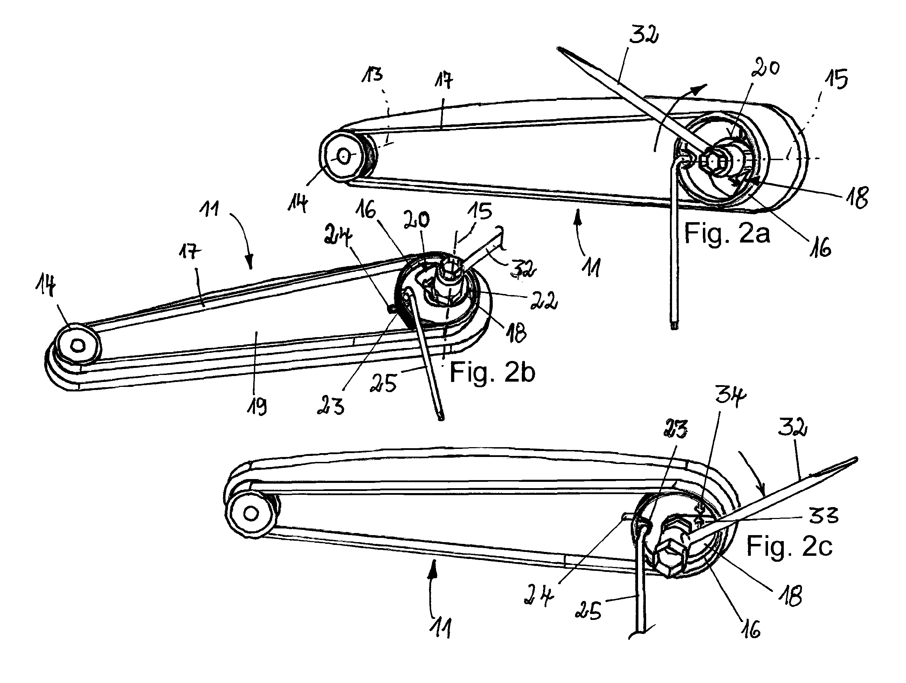

In den Figuren 2a, 2b und 2c ist der Riementrieb 11 jeweils perspektivisch dargestellt. In Figur 2a weist die werkzeugseitige Riemenscheibe 16 eine exzentrische Anordnung zur Werkzeugachse 15 auf. In dieser Anordnung kann der Riemen 17 über die Riemenscheiben 14 und 16 geschlungen werden, ohne diesen zu dehnen. Ist der Riemen 17 über beide Riemenscheiben 14 und 16 angeordnet, kann mit einem Werkzeug 32 eine Verdrehung des Montageelementes 18 um die Werkzeugachse 15 hervorgerufen werden. Dabei wandert der Exzenter 20 an der Innenseite der Riemenscheibe 16 entlang, und drückt diese in Richtung zur konzentrischen Anordnung zur Werkzeugachse 15. Während die Riemenscheibe 16 von der exzentrischen zur konzentrischen Anordnung zur Werkzeugachse 15 bewegt wird, bleibt der Abstand zwischen der Antriebsachse 13 und der Werkzeugachse 15 unverändert. Die Drehrichtung, die mit dem Werkzeug 32 ausgeführt werden muss, ist mit einem Pfeil um die Werkzeugachse 15 angedeutet.

Figur 2b zeigt den Riementrieb 11 mit der Riemenscheibe 16, die bereits weiter in Richtung zur Werkzeugachse 15 bewegt wurde, sodass sich der Abstand zwischen der antriebsseitigen Riemenscheibe 14 und der werkzeugseitigen Riemenscheibe 16 weiter vergrößert hat, und wobei durch die Vergrößerung des Abstandes eine Spannung in den Riemen 17 eingebracht wurde. Das Werkzeug 32 ist gegenüber der Position in 2a weiter um die Werkzeugachse 15 verdreht, und der Exzenter 20 des Montageelementes 18, der gegen die innenseitige Druckfläche 22 in der Riemenscheibe 16 andrückt, hat eine Umfangsposition zum Berührungspunkt gegen die Druckfläche 22 erreicht, der bereits einen größeren Abstand zur Werkzeugachse 15 aufweist.

Damit die Riemenscheibe 16 sich beim Verdrehen des Montageelementes 18 mittels des Werkzeugs 32 nicht mitdreht, ist ein Bolzen 25 vorgesehen, der durch ein Loch 23 und ein Langloch 24 hindurchgeführt ist. Das Loch 23 ist in der Riemenscheibe 16 eingebracht, und das Langloch 24, das sich in Richtung zwischen den beiden Riemenscheiben 14 und 16 erstreckt, ist in den Ausleger 19 eingebracht. Durch die Anordnung des Bolzens 25 sowohl durch das Loch 23 als auch durch das Langloch 24 kann sich die Riemenscheibe 16 in veränderlichem Abstand zur Riemenscheibe 14 bewegen, indem der Bolzen 25 durch das Langloch 24 entlangwandert.

Dabei bleibt die rotatorische Position der Riemenscheibe 16 jedoch unverändert. Folglich kann der Exzenter 20 gegen die Druckfläche 22 abgleiten, ohne dass durch die Reibkraft zwischen dem Exzenter 20 und der Druckfläche 22 die Riemenscheibe 16 mitgedreht würde. Der Bolzen 25 ist dabei lediglich beispielhaft als Steckschlüssel gezeigt, und der Bolzen 25 kann zur Anordnung durch das Loch 23 und das Langloch 24 auch dann Anwendung finden, wenn beispielsweise das Werkzeug 12 gewechselt werden muss, während die Riemenscheibe 16 in der Verdrehung um die Werkzeugachse 15 blockiert werden muss.

In Figur 2c ist der Riementrieb 11 mit der Spanneinrichtung gezeigt, wobei die werkzeugseitige Riemenscheibe 16 bereits die konzentrische Anordnung zur Werkzeugachse 15 eingenommen hat. Dabei ist im Vergleich zur Ansicht in Figur 2b sichtbar, dass der in das Loch 23 eingesteckte Bolzen 25 entlang des Langloches 24 gewandert ist. Ferner ist sichtbar, dass das Werkzeug 32 eine weitergedrehte Winkelposition gegenüber den Figuren 2b und 2a aufweist.

Am Montageelement 18 ist in für einen Bediener sichtbarer Weise ein Markierungspfeil 33 aufgebracht, der Spitze an Spitze mit einem weiteren Markierungspfeil 34 gezeigt ist, der auf der Innenseite der Riemenscheibe 16 aufgebracht ist. Wenn die beiden Markierungspfeile 33 und 34 gemäß der Darstellung aufeinander zuzeigen, so kann die endgültige Spannposition der Riemenscheibe 16 durch das Montageelement 18 angezeigt werden. Nur in dieser Position kann die Riemenscheibe 16 konzentrisch mit der Werkzeugachse 15 angeordnet sein, sodass die notwendige Verdrehung des Montageelementes 18 um die Werkzeugachse 15 mittels des Werkzeugs 32 die Endposition erreicht hat. Ferner deuten die Markierungspfeile 33 und 34 einen Verschleißzustand des Montageelementes 18 beziehungsweise der Riemenscheibe 16 an, und wenn die beiden Markierungspfeile 33 und 34 einen Versatz zueinander aufweisen, kann daraus ein Verschleiß des Montageelementes 18, insbesondere der Oberfläche des Exzenters 20 und der Druckfläche 22, angedeutet werden. Ein derartiger Verschleiß hätte insbesondere zur Folge, dass die Riemenscheibe 16 nicht mehr konzentrisch um die Werkzeugachse 15 läuft, wodurch der Riementrieb 11 bei Betrieb des Motorarbeitsgerätes 100 Schaden nehmen könnte.

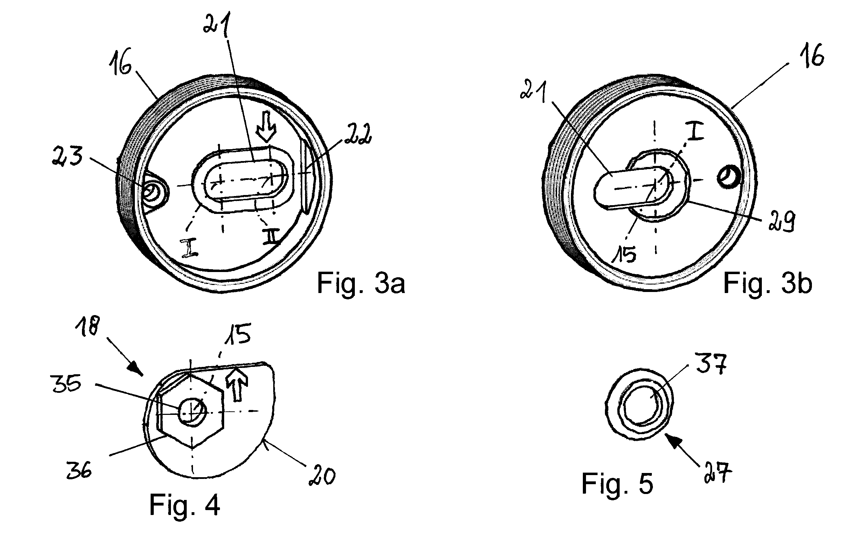

Die Figuren 3a und 3b zeigen ein Ausführungsbeispiel der Riemenscheibe 16 in einer Vorder- und einer Rückansicht. Als wesentliches Konstruktionsmerkmal zur Bildung der Desachsierung der Riemenscheibe 16 auf der Werkzeugachse 15 weist die Riemenscheibe 16 ein Langloch 21 auf. Die Werkzeugachse 15 erstreckt sich durch das Langloch 21, wenn die Riemenscheibe 16 auf der Werkzeugachse 15 angeordnet wird. Dabei nimmt die Werkzeugachse 15 die Position I im Langloch 21 ein, wenn sich die Werkzeugachse 15 konzentrisch mit der Rotationsachse der Riemenscheibe 16 befindet und die Werkzeugachse 15 nimmt durch Verschiebung der Riemenscheibe 16 die Position II an, die die exzentrische Anordnung der Werkzeugachse 15 zur Rotationsachse der Riemenscheibe 16 wiedergibt.

Weiterhin gezeigt ist das Loch 23 in einer gegenüberliegenden Anordnung zur Druckfläche 22, die innenseitig in der Riemenscheibe 16 als Flanke angeordnet ist, und gegen die der Exzenter 20 des Montageelementes 18 andrücken kann, das in Figur 4 gezeigt ist.

In Figur 4 ist das Montageelement 18 mit dem Exzenter 20 gezeigt, und im Montageelement 18 ist eine Achsbohrung 35 eingebracht, und durch die Achsbohrung 35 erstreckt sich die Werkzeugachse 15, wenn das Montageelement 18 auf der Werkzeugachse 15 angeordnet wird.

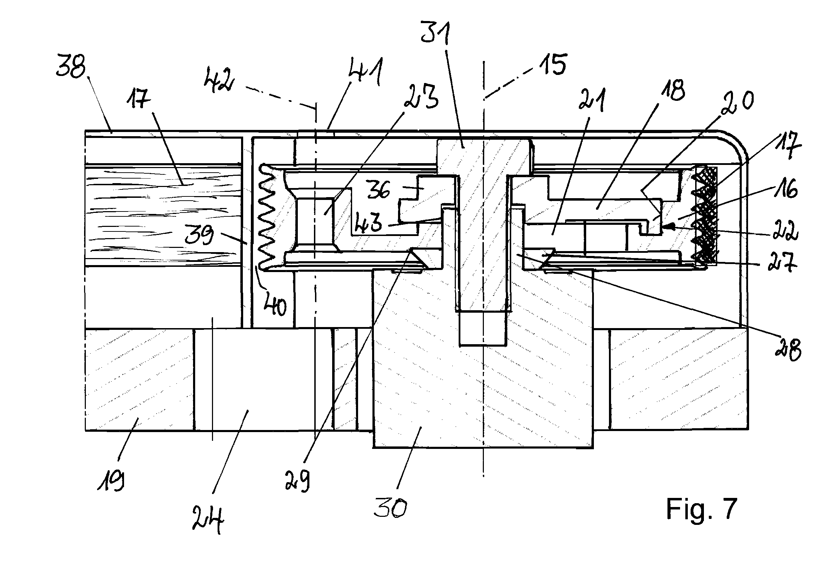

Das Montageelement 18 ist plattenförmig ausgeführt, und um die Achsbohrung 35 ist auf einer Planfläche des Montageelementes 18 eine Sechskantanformung 36 angebracht. Mittels der Sechskantanformung 36 kann durch das in den Figuren 2a, 2b und 2c gezeigte Werkzeug 32 auf dem Montageelement 18 angesetzt werden, um das Montageelement 18 um die Werkzeugachse 15 zu verdrehen, sodass der Exzenter 20 an der Druckfläche 22 entlanggleitet. Ferner kann die Zentralschraube 31, siehe hierzu Figur 1, durch die Achsbohrung 25 hindurchgeführt werden. Eine genauere Anordnung des Montageelementes 18 auf dem Achskörper 28 in der Werkzeugachse 15 mittels der Zentralschraube 31 ist in Figur 7 gezeigt.

Figur 3b zeigt die werkzeugseitige Riemenscheibe 16 von der in Figur 3a gegenüberliegenden Seite. Das Langloch 21 ist in der konzentrischen Anordnung I der Werkzeugachse 15 durch eine Vertiefung 29 eingefasst. In die Vertiefung 29 kann ein Sicherungsring 27 gemäß der Darstellung in Figur 5 eingesetzt werden. Im Sicherungsring 27 ist eine weitere Achsbohrung 37 eingebracht, durch die sich die Werkzeugachse 15 erstrecken kann. Ist die Riemenscheibe 16 in die konzentrische Anordnung mit der Werkzeugachse 15 gebracht, sodass sich die Werkzeugachse 15 in der konzentrischen Anordnung I befindet, so kann der Sicherungsring 27 über die Werkzeugachse 15 geschoben werden, um diesen in der Vertiefung 29 einzurasten. Wird anschließend die Zentralschraube 31 festgezogen, so sitzt der Sicherungsring 27 fest in der Vertiefung 29, und die Riemenscheibe 16 ist in der konzentrischen Anordnung I auf der Werkzeugachse 15 gesichert, ohne dass die Sicherung über den Druckkontakt des Exzenters 21 des Montageelementes 18 gegen die Druckfläche 22 innenseitig in der Riemenscheibe 16 auch während des Betriebes des Motorarbeitsgerätes 100 erfolgen muss.

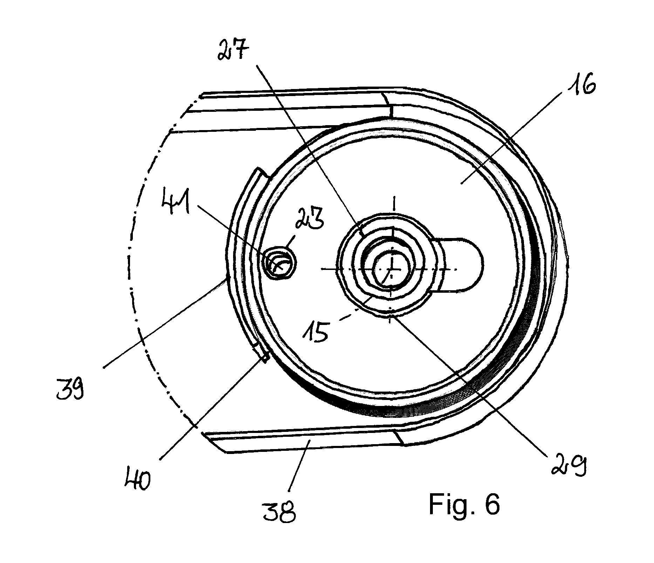

Figur 6 zeigt eine Anordnung der werkzeugseitigen Riemenscheibe 16 und einem Deckelelement 38, das nach Abschluss der Montage des Riemens 17 auf dem nicht näher gezeigten Ausleger 19 montiert werden kann. die Riemenscheibe 16 befindet sich in der konzentrischen Anordnung zur Werkzeugachse 15, sodass in die Vertiefung 29 in der Riemenscheibe 16 der Sicherungsring 27 eingesetzt worden ist. Der Sicherungsring 27 kann auch vor der Riemenscheibe 16 auf dem Achskörper in der Werkzeugachse 15 aufgesetzt werden, sodass dieser bei Erreichen der konzentrischen Anordnung der Riemenscheibe 16 mit der Werkzeugachse 15 in die Vertiefung 29 "einrastet".

Im Deckelelement 38 ist eine Rippe 39 angebracht, die unter Bildung eines Freiraumes 40 zur Riemenscheibe 16 im Deckelelement 38 positioniert ist. Die Rippe 39 ist so im Deckelelement 38 angebracht, dass die Riemenscheibe 16 gegen die Rippe 29 anstoßen würde, wenn sich die Riemenscheibe 16 von der gezeigten konzentrischen Anordnung zur Werkzeugachse 15 in die exzentrische Anordnung verlagern würde. Verlagert sich unbeabsichtigt die Riemenscheibe 16 unter Überwindung des Freiraumes 40 in Richtung zur Rippe 39, kann die Riemenscheibe 16 in Betrieb des Motorarbeitsgerätes 100 gegen die Rippe 39 anstoßen. Im Betrieb rotiert die Riemenscheibe 16 und bildet ein Schleifgeräusch, wenn die Riemenscheibe 16 gegen die Rippe 39 zur Anlage gelangen würde. Damit kann ein Indikator gebildet werden, durch den angezeigt wird, ob die Riemenscheibe 16 tatsächlich richtig montiert ist, und sich in der konzentrischen Anordnung zur Werkzeugachse 15 befindet. Insbesondere kann das Deckelelement 38 nur dann auf dem Ausleger 19 montiert werden, wenn sich die Riemenscheibe 16 in der geforderten konzentrischen Anordnung zur Werkzeugachse 15 befindet.

Im Deckelelement 38 ist ferner eine Öffnung 41 eingebracht, die in der gezeigten rotatorischen Position der Riemenscheibe 16 mit dem Loch 23 in der Riemenscheibe 16 in Überdeckung gebracht werden kann. Befindet sich die Öffnung 41 im Deckelelement 38 in Überdeckung mit dem Loch 23 in der Riemenscheibe 16, so fluchten die Öffnung 41 und das Loch 23 zugleich mit dem Langloch 24 im Ausleger 19. Soll das Werkzeug 12 des Motorarbeitsgerätes 100 gewechselt werden, so kann der in den Figuren 2a, 2b und 2c gezeigte Bolzen 25 sowohl durch die Öffnung 41, durch das Loch 23 und durch das Langloch 24 hindurchgeführt werden, um die Riemenscheibe 16 und folglich das Werkzeug 12 in der Rotationsbewegung zu blockieren, ohne dass das Deckelelement 38 vom Ausleger 19 abgenommen werden muss.

Figur 7 zeigt eine quergeschnittene Ansicht der Anordnung der werkzeugseitigen Riemenscheibe 16 am Ausleger 19. Die Riemenscheibe 16 ist in konzentrischer Anordnung zur Werkzeugachse 15 gezeigt, sodass das Motorarbeitsgerät 100 in der gezeigten Anordnung in Betrieb genommen werden kann. Ferner ist der Riemen 17 gezeigt, der die werkzeugseitige Riemenscheibe 16 umschlingt. Zur haltenden Anordnung der Riemenscheibe 16 um die Werkzeugachse 15 ist diese auf einem Achskörper 28 aufgesetzt, und der Achskörper 28 erstreckt sich durch das Langloch 21 in der Riemenscheibe 16.

Zur Positionierung der Riemenscheibe 16 ist zwischen der Riemenscheibe 16 und dem Achskörper 28 der Sicherungsring 27 angeordnet, durch den sich der Achskörper 28 hindurch erstreckt und wobei sich der Sicherungsring 27 in der Vertiefung 29 der Riemenscheibe 16 befindet. Angrenzend an die Riemenscheibe 16 ist das Montageelement 18 gezeigt, welches derart zur Riemenscheibe 16 verdreht ist, dass die Drehposition der Position entspricht, die in Figur 2c gezeigt ist. Dabei gelangt der Exzenter 20 des Montageelementes 18 in der Position des größten Radius des Exzenters 20 gegen die Druckfläche 22 innenseitig in der Riemenscheibe 16. Das Montageelement 18 ist durch die Zentralschraube 31 auf dem Achskörper 28 aufgenommen, und der Achskörper 28 ist über eine Lageranordnung 30 um die Werkzeugachse 15 drehbar am Ausleger 19 angeordnet.

Die Querschnittsansicht zeigt ferner das Langloch 24 im Ausleger 19, und die Bohrung 23 in der Riemenscheibe 16 sowie die Öffnung 41 im Deckelelement 38 fluchten zueinander in einer Arretierungsachse 42. In der gezeigten Anordnung der Riemenscheibe 16 mit dem Montageelement 18 kann das Deckelelement 38 mit der Rippe 39 auf dem Ausleger 19 montiert werden, und es herrscht ein Freiraum 40 zwischen der Rippe 39 und der Riemenscheibe 16 vor.

Das Montageelement 18 ist über eine Zentrierung 43 auf dem Achskörper 28 aufgenommen, und um das Montageelement 18 um die Werkzeugachse 15 in die gezeigte Endposition zu verdrehen, muss zunächst die Zentralschraube 31 leicht gelöst werden, ohne dass das Montageelement 18 vom Achskörper 28 entnommen und die Zentrierung 43 gelöst wird. Ist unter Einführung des Bolzens durch das Loch 23 und durch das Langloch 24 das Montageelement 18 in die Endposition um die Werkzeugachse 15 verdreht, so muss die Zentralschraube 31 wieder festgezogen werden. Anschließend kann der Bolzen wieder aus dem Loch 23 beziehungsweise aus dem Langloch 24 herausgenommen werden, um nachfolgend das Deckelelement 38 zu montieren. Die Zentralschraube 31 muss jedoch derart weit gelöst werden, dass der Sicherungsring 27 auf der Unterseite der Riemenscheibe 16 entlang wandern kann, bis dieser in die konzentrische Anordnung zur Vertiefung 29 in der Riemenscheibe 16 gelangt, um beim Anziehen der Zentralschraube 31 endgültig in die Vertiefung 29 in der Riemenscheibe 16 zu gelangen.

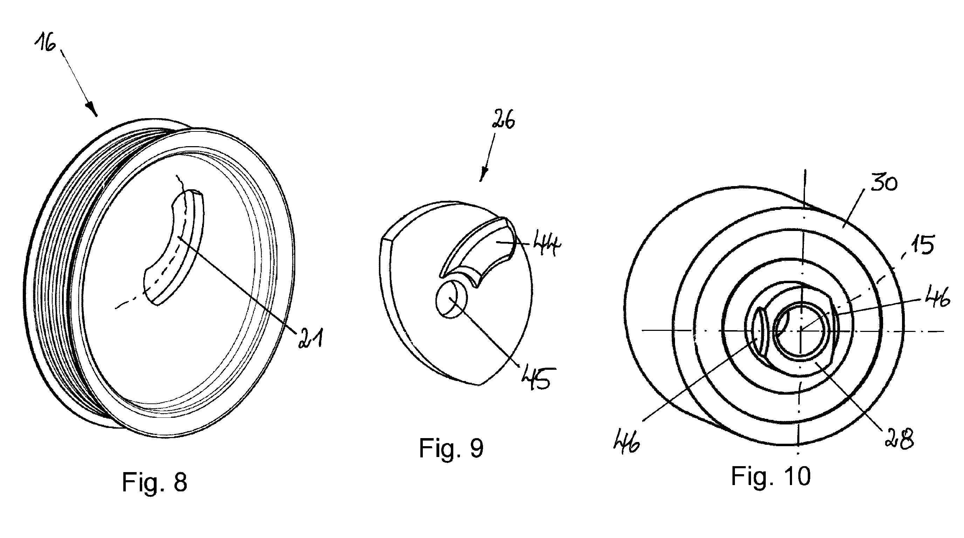

In Figur 8 ist ein weiteres Ausführungsbeispiel einer Riemenscheibe 16 mit einem Langloch 21 gezeigt, welches als Bogennut mit einer Krümmung ausgebildet ist. Durch die bogenförmige Ausführung des Langloches 21 wird erreicht, dass die Spannkraft zwischen dem Exzenter 20 des Montageelementes 18 und der Druckfläche 22 der Riemenscheibe 16, wie bereits beim bogenförmigen Langloch 24 im Ausleger 24 beschrieben, immer in tangentialer Richtung zur Anordnung des Achskörpers 28 im Langloch 21 verläuft, wodurch sich die aufzubringende Kraft mit dem Werkzeug 32 erheblich verringern kann. Im Ergebnis übt der Achskörper 28 während des Spannvorgangs, das heißt während es Verdrehens des Montageelementes 18 relativ zur Riemenscheibe 16, nur eine geringe Führungskraft auf die Flanken des Langloches 21 aus.

Figur 9 zeigt ein Sicherungselement 26, das nach Anordnung der Riemenscheibe 16 konzentrisch zur Werkzeugachse 15 angrenzend an den Innenteller der Riemenscheibe 16 angebracht werden kann. Dabei kann eine Anformung 44, die auf einer Planseite des scheibenförmig ausgeführten Sicherungselementes 26 angebracht ist, in das Langloch 21 in der Riemenscheibe 16 einrasten. Das Sicherungselement 26 besitzt dabei ebenfalls eine Achsbohrung 45, sodass das Sicherungselement 26 auch auf dem Achskörper 28 angeordnet werden kann oder dass sich die Zentralschraube 31 durch die Achsbohrung 45 hindurch erstrecken kann.

Figur 10 zeigt die Lageranordnung 30 in einer perspektivischen Ansicht, durch die der Achskörper 28 in der Werkzeugachse 15 am Ausleger 19 gelagert werden kann. Der Achskörper 28 besitzt Führungsanformungen 46, die eine Führung des Achskörpers 28 im bogenförmigen Langloch 21 der Riemenscheibe 16 gemäß dem Ausführungsbeispiel in Figur 8 ermöglichen. Die Führungsanformungen 46 sind ebenfalls bogenförmig ausgeführt und entsprechen der Krümmung des als Bogennut ausgeführten Langloches 21. Damit ist eine besonders gute Führung des Achskörpers 28 im Langloch 21 möglich, um die Verlagerung der Riemenscheibe 16 auf dem Achskörper 28 zwischen der exzentrischen und der konzentrischen Anordnung zu schaffen.

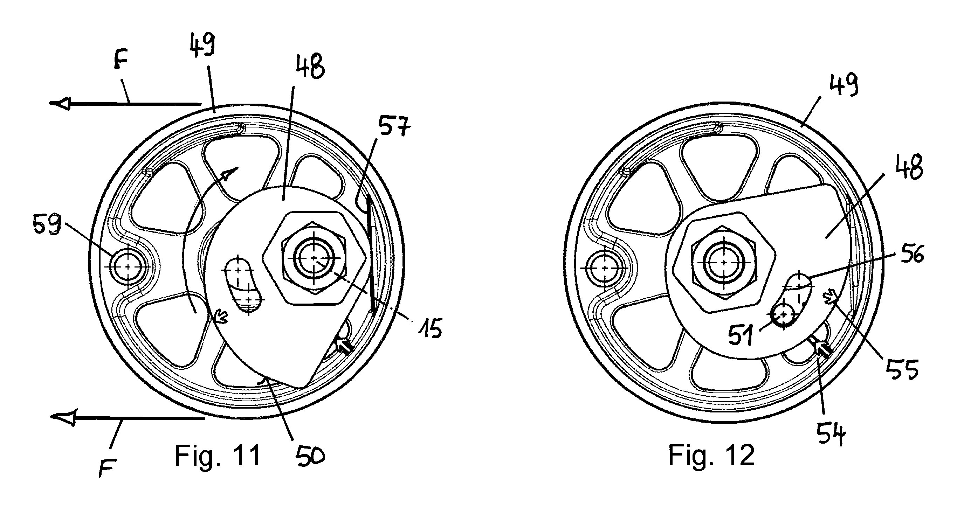

Figur 11 zeigt ein weiteres Ausführungsbeispiel einer Spannvorrichtung mit einer Riemenscheibe 49, in der ein Montageelement 48 angeordnet ist. Die Riemenscheibe 49 ist aus der Werkzeugachse 15 desachsiert, und zum Spannen des Riemens muss die Riemenscheibe 49 mit ihrer Rotationsachse mit der Werkzeugachse 15 in eine konzentrische Lage gebracht werden. Das Montageelement 48 weist einen Exzenter 50 auf und kann mit dem Exzenter 50 gegen eine Druckfläche 57 in der Riemenscheibe 49 andrücken und die Riemenscheibe 49 gegen die Riemenkraft F in die gespannte Lage bringen. Die Drehrichtung um die Werkzeugachse 15, in der das Montageelement 48 gegen die Riemenscheibe 49 zu verdrehen ist, ist mit einem Pfeil angedeutet.

Damit die Riemenscheibe 49 aufgrund der Reibung zwischen dem Exzenter 50 und der Druckfläche 57 nicht mitdreht, kann, wie in den Figuren 2a bis 2c bereits gezeigt, der Bolzen 25 in das Loch 59 in der Riemenscheibe 49 eingesetzt werden.

Figur 12 zeigt die Anordnung der Riemenscheibe 49 mit dem Montageelement 48 in einer weiteren Verdrehposition des Montageelementes 48 in der Riemenscheibe 49. Auf dem Montageelement 48 ist ein Markierungspfeil 55 für einen Benutzer sichtbar angebracht, der durch die Verdrehung des Montageelementes 48 auf einen Markierungspfeil 54 zuwandert, der auf der Riemenscheibe 49 angebracht ist. Die Verdrehung des Montageelementes 48 muss dabei so weit erfolgen, bis die Markierungspfeile 54 und 55 aufeinander zu zeigen.

Weiterhin ist in der Riemenscheibe 49 eine Gewindebohrung 51 eingebracht, die sich bei der gezeigten Verdrehposition des Montageelementes 48 bereits mit einem Langloch 56 im Montageelement 48 in Überdeckung befindet. Bereits in dieser Verdrehposition des Montageelementes 49 kann eine Sicherungsschraube 47 vorgesehen werden, mit der das Montageelement 48 mit der Riemenscheibe 49 verschraubbar ist, und die Sicherungsschraube 47 kann durch das Langloch 56 hindurchgeführt und in der Gewindebohrung 51 verschraubt werden. Die Position des Montageelementes 48 ist noch nicht in der Sollposition gezeigt, und das Montageelement 48 kann auf einem restlichen Verdrehwinkel noch weiter verdreht werden, bis die beiden Markierungspfeile 54 und 55 aufeinander zuzeigen. Jedoch kann für die erforderliche Riemenspannung die Verdrehposition des Montageelementes 48 bereits ausreichend sein, um das Motorarbeitsgerät 100 in Betrieb zu nehmen.

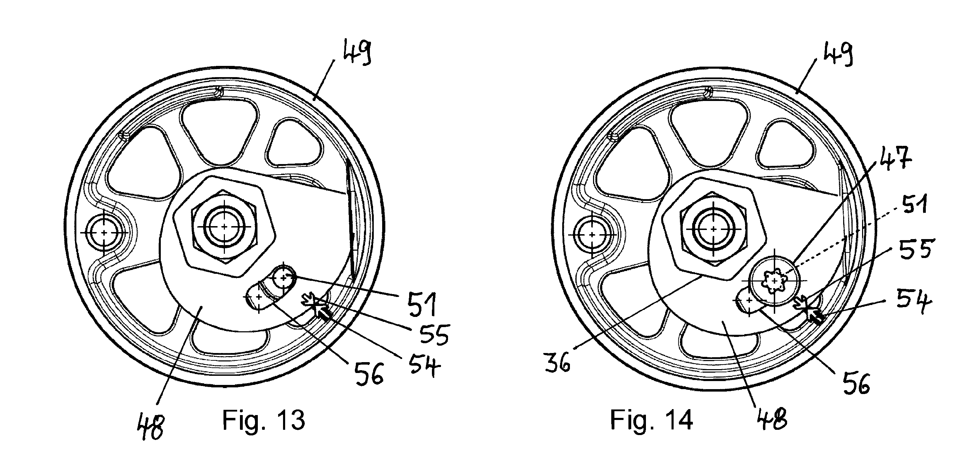

Figur 13 zeigt eine weitere Ansicht der Riemenscheibe 49 mit dem Montageelement 48, und die Markierungspfeile 54 und 55 weisen aufeinander zu. In dieser endgültigen Spannposition des Montageelementes 48 befindet sich die Gewindebohrung 51 in der Riemenscheibe 49 in der gegenüberliegenden Endlage des Langloches 56, sodass auch in dieser Position noch die Sicherungsschraube eingesetzt werden kann.

Figur 14 zeigt die Anordnung der Sicherungsschraube 47 in der Gewindebohrung 51 in der Endlage im Langloch 56. Durch die Sicherungsschraube 47 wird das Montageelement 48 mit der Riemenscheibe 49 gesichert. Nach Anziehen der Sicherungsschraube 47 ist das Montageelement 48 mit der Riemenscheibe 49 bereits formschlüssig verbunden, und die gezeigte Spannposition, für den Benutzer sichtbar durch die aufeinander zuweisenden Markierungspfeile 54 und 55, kann für den Betrieb des Motorarbeitsgerätes 100 sichergestellt werden.

Das Montageelement 48 weist eine Sechskantanformung 36 auf, an der ein Werkzeug, beispielsweise ein Kerzenschlüssel des Motorarbeitsgerätes 100, aufgesetzt werden kann. Jedoch ist die Lage der Sicherungsschraube 47 derart vorgesehen, dass der Kerzenschlüssel nicht auf die Sechskantanformung 36 aufgesetzt werden kann, wenn die Sicherungsschraube 47 in der Gewindebohrung 51 verschraubt ist. Damit wird sichergestellt, dass ein Benutzer nicht dann bereits eine Verdrehung des Montageelementes 48 in der Riemenscheibe 49 einleiten kann, wenn das Montageelement 48 durch die Sicherungsschraube 47 noch in der Riemenscheibe 49 gesichert ist. Folglich muss zunächst die Sicherungsschraube 47 entfernt werden, um das Montageelement 48 über die Sechskantanformung 36 zu verdrehen.

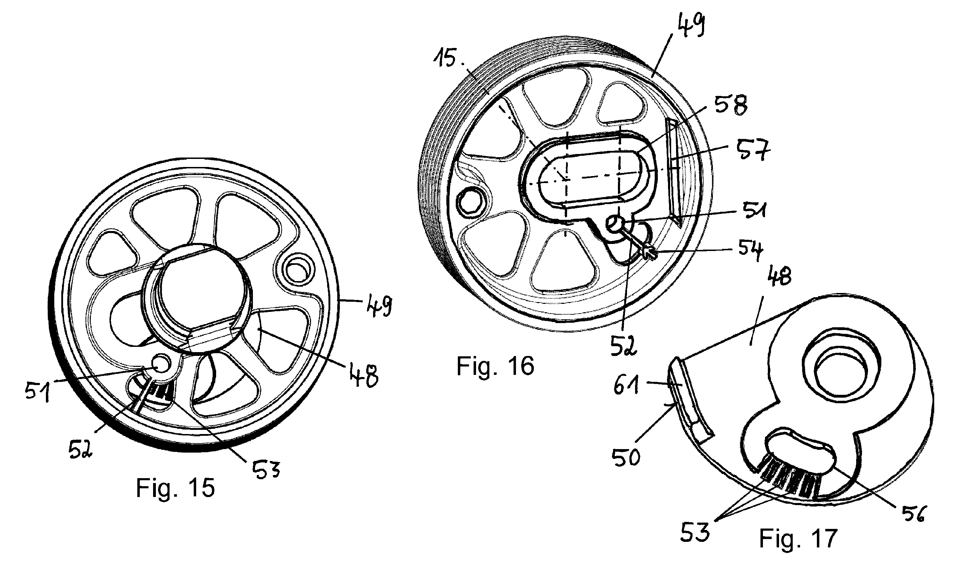

Figur 15 zeigt eine weitere perspektivische Ansicht der Riemenscheibe 49 von einer Rückseite, sodass sich das Montageelement 48 hinter der Riemenscheibe 49 befindet. In dieser Ansicht ist gezeigt, dass in das Montageelement 48 auf der Planseite, die in Richtung zur Riemenscheibe 49 weist, mehrere Rastnuten 53 eingebracht sind. An der Riemenscheibe 49 ist eine Rippe 52 angebracht, die in die Rastnuten 53 auf dem Montageelement 48 verrasten kann. Damit wird erreicht, dass insbesondere dann, wenn die Sicherungsschraube 47 in die Gewindebohrung 51 eingeschraubt wird, wird die durch die Rippen 52 und die Rastnuten 53 gebildete Formschlussgeometrie 52, 53 zwischen dem Montageelement 48 und der Riemenscheibe 49 gesichert ist. Folglich bildet die Sicherungsschraube 47 zunächst einen Formschluss des Montageelementes 48 in der Riemenscheibe 49 in Richtung zur Werkzeugachse 15, und die Verrastung der Rippe 52 in einer der Rastnuten 53 bildet eine Formschlussgeometrie, die ein Verdrehen des Montageelementes 48 um die Werkzeugachse 15 relativ zur Riemenscheibe 49 verhindert.

Figur 16 zeigt die Riemenscheibe 49 in einer weiteren perspektivischen Ansicht, in der die Rippe 52 dargestellt ist. Diese fluchtet mit dem Markierungspfeil 54 und mit der Gewindebohrung 51, und verdreht der Benutzer das Montageelement 48, so kann die Gewindebohrung 51 über dem Drehwinkel durch das Montageelement 48 verdeckt sein, und der Benutzer sieht lediglich das Langloch 56. Durch die fluchtende Anordnung des Markierungspfeils 54 auf der Riemenscheibe 49 mit der Rippe 52 und der Gewindebohrung 51 in radialer Richtung erhält der Benutzer jedoch eine Information über die Position der Rippe 52 und der Gewindebohrung 51. Somit kann die Riemenscheibe 49 derart in die konzentrische Lage mit der Werkzeugachse 15 gebracht werden, dass sich diese auf der Endlage innerhalb des Langloches 58 in der Riemenscheibe 49 befindet, in der das Motorarbeitsgerät in Betrieb genommen werden kann.

Figur 17 zeigt eine einzelne perspektivische Ansicht des Montageelementes 48 von der Seite, die in Anordnung in der Riemenscheibe 49 auf diese zuweist. Die Ansicht zeigt die Rastnuten 53, in die die Rippe 52 der Riemenscheibe 49 verrasten kann. Die Rastnuten 53 sind im Bereich der Berandung des Langloches 56 angeordnet, und die Rippe 52 kann nur dann in eine der Rastnuten 53 verrasten, wenn die Gewindebohrung 51 mit dem Langloch 56 in Überdeckung gebracht ist. Weiterhin gezeigt ist der an das Montageelement 48 angeformte Exzenter 50, der im Bereich der Endlage, in der die Riemenscheibe 49 in der Spannposition ist, eine Anformung 61 aufweist, um die Kontaktfläche zwischen dem Montageelement 48 und der Druckfläche 57 in der Riemenscheibe 49 zu vergrößern.

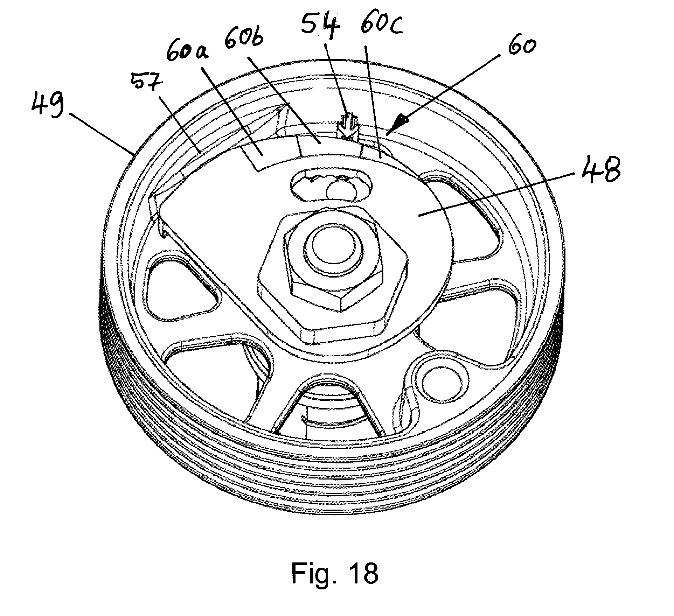

Figur 18 zeigt schließlich eine perspektivische Ansicht der Riemenscheibe 49 mit einem Montageelement 48, wobei der am Montageelement 48 angeordnete Markierungspfeil 55 ersetzt ist durch ein Farbfeld 60, das mit dem Markierungspfeil 54 auf der Riemenscheibe 49 in Überdeckung gebracht werden kann. Das Farbfeld 60 weist ein erstes, beispielsweise rotes Feld 60a, ein zweites, beispielsweise grünes Feld 60b und ein drittes, beispielsweise ebenfalls rotes Feld 60c auf. Wir das Montageelement 48 in der Riemenscheibe 49 verdreht, so kann der Markierungspfeil 54 auf der Riemenscheibe 49 mit dem Farbfeld 60 in Überdeckung gebracht werden. Dabei sollte die Überdeckung mit dem grünen Feld 60b in Übereinstimmung gebracht werden, um eine ordnungsgemäße Spanneinstellung der Riemenscheibe 49 zu erreichen. Wird das Montageelement 48 lediglich bis zum ersten roten Feld 60a verdreht, so ist die Riemenspannung noch nicht hinreichend. Kann hingegen das Montageelement 48 bis zur Überdeckung mit dem dritten roten Feld 60c in verdreht werden, so kann von einem unzulässigen Verscheiß des Montageelementes 48 oder der Druckfläche 57 in der Riemenscheibe 49 ausgegangen werden.

Die Erfindung beschränkt sich in ihrer Ausführung nicht auf das vorstehend an-gegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein. Insbesondere kann die in den Figuren 8, 9 und 10 gezeigte Anordnung der Riemenscheibe 16 mit dem bogenförmigen Langloch 21, das Sicherungselement 26 mit dem angepassten Achskörper 28 in den in den Figuren 1 bis 7 gezeigten Ausführungsbeispielen Verwendung finden.

## Patentansprüche

1. Motorarbeitsgerät (100) mit einem Motor (10) und mit einem durch den Motor (10) über einen Riementrieb (11) angetriebenen Werkzeug (12), wobei der Riementrieb (11) eine in einer Antriebsachse (13) rotierende antriebsseitige Riemenscheibe (14) und eine in einer Werkzeugachse (15) rotierende werkzeugseitige Riemenscheibe (16, 49) aufweist, und wobei über die Riemenscheiben (14, 16, 49) ein Riemen (17) spannbar ist, **dadurch gekennzeichnet, dass** zumindest eine der Riemenscheiben (16, 49) in eine aus ihrer aufnehmenden Achse (13, 15) exzentrische Anordnung bringbar ist und dass ein Montageelement (18, 48) vorgesehen ist, das um die Werkzeugachse (15) drehbar aufgenommen ist und das einen Exzenter (20, 50) aufweist, mittels dem die Riemenscheibe (14, 16, 49) durch Verdrehen des Montageelementes (18, 48) um die Werkzeugachse (15) und unter Aufbringung einer Vorspannung in den Riemen (17) in die mit der Achse (13, 15) konzentrische Anordnung zurückführbar ist.

2. Motorarbeitsgerät nach Anspruch 1, **dadurch gekennzeichnet,** dass ein Ausleger (19) vorgesehen und an dem das Werkzeug (12) in der Werkzeugachse (15) drehbar gelagert angeordnet ist, wobei durch den Ausleger (19) ein starrer Abstand zwischen der Antriebsachse (13) und der Werkzeugachse (15) vorherrscht, wobei insbesondere die Riemenscheibe (16, 49), die in eine aus ihrer Achse (15) exzentrische Anordnung bringbar ist, durch die werkzeugseitige Riemenscheibe (16, 49) gebildet ist.

3. Motorarbeitsgerät nach einem der Ansprüche 1 oder 2, **dadurch gekennzeichnet,** dass die Riemenscheibe (16, 49) ein Langloch (21, 56) aufweist, durch das sich die Werkzeugachse (15) hindurch erstreckt, und sodass die Riemenscheibe (16, 49) zwischen der exzentrischen Anordnung und der konzentrischen Anordnung unter Verlagerung der Werkzeugachse (15) im Langloch (21, 58) in einer Riemenspannrichtung bewegbar ist, wobei die Riemenscheibe (16, 49) eine Druckfläche (22, 57) aufweist, gegen die der Exzenter (20, 50) zur Anlage bringbar ist.

4. Motorarbeitsgerät nach einem der Ansprüche 1 bis 3, **dadurch gekennzeichnet,** dass Mittel vorgesehen sind, durch die die Riemenscheibe (16) um die Werkzeugachse (15) rotatorisch blockierbar ist, sodass eine Verdrehung des Montageelementes (18, 48) um die Werkzeugachse (15) relativ zur Riemenscheibe (16) ermöglicht ist, wobei die Mittel vorzugsweise durch ein Loch (23, 59) in der Riemenscheibe (16, 49) und ein Langloch (24) im Ausleger (19) gebildet sind, wobei durch das Loch (23, 59) und durch das Langloch (24) ein Bolzen (25) hindurch führbar ist.

5. Motorarbeitsgerät nach einem der vorgenannten Ansprüche, **dadurch gekennzeichnet,** dass das Langloch (24) im Ausleger (19) gerade oder als Bogennut mit einer Krümmung ausgeführt ist, insbesondere wobei nach Zurückführung der Riemenscheibe (16, 49) in die konzentrische Anordnung mit der Werkzeugachse (15) in das Langloch (21) ein Sicherungselement (26) einsetzbar ist, um die Riemenscheibe (16, 49) in der konzentrischen Anordnung zur Werkzeugachse (15) zu sichern.

6. Motorarbeitsgerät nach einem der vorgenannten Ansprüche, **dadurch gekennzeichnet,** dass ein Sicherungsring (27) vorgesehen ist, der bei konzentrischer Anordnung der Riemenscheibe (16, 49) zur Werkzeugachse (15) auf einen Achskörper (28) der Werkzeugachse (15) aufsetzbar und in eine in der Riemenscheibe (16, 49) eingebrachte Vertiefung (29) einbringbar ist.

7. Motorarbeitsgerät nach einem der vorgenannten Ansprüche, **dadurch gekennzeichnet,** dass eine Sicherungsschraube (47) vorgesehen ist, mit der das Montageelement (48) mit der Riemenscheibe (49) verschraubbar ist.

8. Motorarbeitsgerät nach Anspruch 7, **dadurch gekennzeichnet,** dass das Montageelement (18) ein Langloch (56) zur Hindurchführung der Sicherungsschraube (47) aufweist, das derart bemessen ist, dass die Sicherungsschraube (47) dann durch das Langloch (56) hindurchführbar ist, wenn der Exzenter (50) unverschlissen ist und/oder wenn das Montageelement (48) hinreichend gespannt ist, wobei in der Riemenscheibe (49) vorzugsweise eine Gewindebohrung (51) eingebracht ist, in die die Sicherungsschraube (47) einschraubbar ist.

9. Motorarbeitsgerät nach Anspruch 7 oder 8, **dadurch gekennzeichnet,** dass das Montageelement (48) und die Riemenscheibe (49) jeweils eine Formschlussgeometrie (52, 53) aufweisen, die formschließend ineinander bringbar sind, und durch die eine Verdrehung des Montageelementes (48) in der Riemenscheibe(49) verhindert ist, insbesondere wenn das Montageelement (48) mit der Riemenscheibe (49) durch die Sicherungsschraube (47) verschraubst ist.

10. Motorarbeitsgerät nach Anspruch 9, **dadurch gekennzeichnet,** dass die Formschlussgeometrie (52, 53) eine an der Riemenscheibe (49) vorgesehene Rippe (52) und am Montageelement (48) vorgesehene Rastnuten (53) aufweist, wobei die Rippe (52) dann in eine der Rastnuten (53) einrastbar ist, wenn der Exzenter (50) unverschlissen ist und/oder wenn das Montageelement (48) hinreichend gespannt ist.

11. Motorarbeitsgerät nach einem der Ansprüche 7 bis 10, **dadurch gekennzeichnet,** dass das Montageelement (48) mittels einer Sechskantanformung (36) mit einem Werkzeug (32) um die Werkzeugachse (15) drehbar ist, wobei die Sicherungsschraube (47) derart relativ zur Sechskantanformung (36) angeordnet ist, dass das Werkzeug (32) nicht mit der Sechskantanformung (36) in Wirkverbindung bringbar ist, wenn die Sicherungsschraube (47) das Montageelement (48) mit der Riemenscheibe (49) verschraubend angeordnet ist.

12. Motorarbeitsgerät nach einem der Ansprüche 7 bis 10, **dadurch gekennzeichnet,** dass an der Riemenscheibe (49) ein Markierungspfeil (54) und am Montageelement (48) ein Markierungspfeil (55) angeordnet ist, wobei die Markierungspfeile (54, 55) durch ein Verdrehen des Montageelementes (48) um die Werkzeugachse (15) aufeinander zu bewegbar sind, wobei insbesondere dann eine optimale Verspannung des Montageelementes (48) in der Riemenscheibe (49) erreicht ist, wenn die Markierungspfeile (54, 55) aufeinander zeigen.

13. Riemenscheibe (14, 16) eines Riementriebes (11) für ein Motorarbeitsgerät, wobei der Riementrieb (11) eine in einer Antriebsachse (13) rotierende antriebsseitige Riemenscheibe (14) und eine in einer Werkzeugachse (15) rotierende werkzeugseitige Riemenscheibe (16) aufweist, wobei die Riemenscheibe (14, 16) ein Langloch (21) aufweist, durch das eine Achse (13, 15) hindurch führbar ist, auf der die Riemenscheibe (14, 16) aufnehmbar und entlang des Langloches (21) auf der Achse (13, 15) zwischen einer exzentrischen und einer konzentrischen Anordnung verstellbar ist, **dadurch gekennzeichnet, dass** die Riemenscheibe (14, 16) ein Montageelement (18, 48) umfasst, das um die Werkzeugachse (15) drehbar aufnehmbar ist und das einen Exzenter (20, 50) aufweist, mittels dem die Riemenscheibe (14, 16, 49) durch Verdrehen des Montageelementes (18, 48) um die Werkzeugachse (15) zwischen der exzentrischen und der konzentrischen Anordnung verstellbar ist.

14. Verfahren zur Montage eines Riemens (17) eines Riementriebes (11) zwischen einem Motor (10) und einem Werkzeug (12) eines Motorarbeitsgerätes (100), wobei der Riementrieb (11) eine in einer Antriebsachse (13) rotierende antriebsseitige Riemenscheibe (14) und eine in einer Werkzeugachse (15) rotierende werkzeugseitige Riemenscheibe (16, 49) aufweist, wobei das Verfahren wenigstens die folgenden Schritte aufweist:
- Überführen wenigstens einer der Riemenscheiben (14, 16, 49) aus einer konzentrischen Anordnung mit der aufnehmenden Achse (13, 15), auf der die Riemenscheibe (14, 16, 49) aufgenommen ist, in eine exzentrische Anordnung, Auflegen des Riemens (17) auf die Riemenscheiben (14, 16, 49),
- Rückführen der Riemenscheibe (14, 16, 49) in die mit der Achse (13, 15) konzentrische Anordnung, wodurch eine Vorspannung in den Riemen (17) eingebracht wird, wofür
- ein Montageelement (18, 48) um die Achse (13, 15) drehbar aufgenommen ist, welches einen Exzenter (20, 50) aufweist, wobei das Montageelement (18, 48) um die Achse (13, 15) verdreht wird, sodass die Riemenscheibe (14, 16, 49) durch den Exzenter (20, 50) in die konzentrische Anordnung mit der Achse (13, 15) überführt wird.

15. Verfahren nach Anspruch 14 , **dadurch gekennzeichnet,** dass die Riemenscheibe (14, 16, 49) ein Langloch (21, 58) aufweist, durch das sich die Achse (13, 15) hindurch erstreckt, und sodass die Riemenscheibe (14, 16, 49) zwischen der exzentrischen Anordnung und der konzentrischen Anordnung unter Verlagerung der Achse (13, 15) im Langloch (21, 58) in eine Riemenspannrichtung bewegt wird, wenn das Montageelement (18, 48) um die Achse (13 15) verdreht wird, wobei vorzugsweise Mittel verwendet werden, durch die die Riemenscheibe (14, 16, 49) um die Achse (13, 15) blockiert wird, sodass das Montageelement (18) um die Achse (13, 15) und relativ zur Riemenscheibe (14, 16, 49) verdreht wird.

16. Verfahren nach Anspruch 14 oder 15 , **dadurch gekennzeichnet,** dass eine Sicherungsschraube (47) bereitgestellt werden, mit der das Montageelement (48) mit der Riemenscheibe (49) verschraubt wird, wobei die Sicherungsschraube (47) dann verschraubt wird, wenn das Montageelement (48) in die vorgesehene Spannposition gebracht ist und die Riemenscheibe (49) in die mit der Achse (13, 15) konzentrische Anordnung gebracht ist.

## Claims

1. A power tool (100) with a motor (10) and with a tool (12) driven by the motor (10) via a belt drive (11), wherein the belt drive (11) has a drive-side belt pulley (14) rotating in a drive axle (13) and a tool-side belt pulley (16, 49) rotating in a tool axle (15) and wherein a belt (17) can be tensioned over the belt pulleys (14, 16, 49), **characterised in that** at least one belt pulley (16, 49) can be brought into a position eccentric from its holding axle (13, 15) and **in that** an assembly element (18, 48) is provided that is held rotatably about the tool axle (15) and has an eccentric cam (20, 50) by means of which the belt pulleys (14, 16, 49), by turning of the assembly element (18, 48) about the tool axle (15) and through pre-tensioning the belt (17), can be returned to the arrangement concentric with the axle (13, 15).

2. The power tool according to claim 1, **characterised in that** an extension arm (19) is provided and on which the tool (12) is rotatably arranged in the tool axle (15), whereby as result of the extension arm (19) there is a rigid distance between the drive axle (13) and the tool axle (15), whereby more particularly the belt pulley (16, 49), which can be moved into an eccentric position in relation to its axle (15), is formed by the tool-side belt pulley (16, 49).

3. The power tool according to any one of claims 1 or 2, **characterised in that** the belt pulley (16, 49) has an elongated hole (21, 56) through which the tool axle (15) extends, and so that the belt pulley (16, 49) can be moved in a belt tension direction between the eccentric arrangement and the concentric arrangement through displacement of the tool axle (15) in the elongated hole (21, 58), wherein the belt pulley (16, 49) has a pressure surface (22, 57) against which the eccentric cam (20, 50) can be brought into contact.

4. The power tool according to any one of claims 1 to 3, **characterised in that** means are provided through which the belt pulley (16) is rotationally blockable about the tool axle (15) so that turning of the assembly element (18, 48) about the tool axle (15) relative to the belt pulley (16) is made possible, whereby the means are preferably formed by a hole (23, 59) in the belt pulley (16, 49) and an elongated hole (24) in the extension arm (19), wherein a bolt (25) is passable through the hole (23, 59) and through the elongated hole (24).

5. The power tool according to any one of the preceding claims, **characterised in that** the elongated hole (24) in the extension arm (19) is designed to be straight or as an axe slot having curvature, more particularly wherein after returning the belt pulley (16, 49) into the concentric arrangement with the tool axle (15) a securing element (26) can be inserted in the elongated hole (21)in order to secure the belt pulley (16, 49) in the concentric arrangement relative to the tool axle (15).

6. The power tool according to any one of the preceding claims, **characterised in that** a securing ring (27) is provided, which in the concentric arrangement of the belt pulley (16, 49) relative to the tool axle (15) is mountable on an axle body (28) of the tool axle (15) and insertable into a recess (29) formed in the belt pulley (16, 49).

7. The power tool according to any one of the preceding claims, **characterised in that** a securing screw (47) is provided with which the assembly element (48) can be screwed to the belt pulley (49).

8. The power tool according to claim 7, **characterised in that** the assembly element (18) has an elongated hole (56) for passing the securing screw (47) there through which is dimensioned in such a way that the securing screw (47) is passable through the elongated hole (56) when the eccentric cam (50) is unworn and/or when the assembly element (48) is sufficiently tensioned, wherein there is preferably a threaded hole (51) in the belt pulley (49) into which the securing screw can be screwed (47).

9. The power tool according to claim 7 or 8, **characterised in that** the assembly element (48) and the belt pulley (49) each have a form-fit geometry (52, 53) which is interlockable in a form-fitting manner with each other and through which turning of the assembly element (48) in the belt pulley (49) is prevented, more particularly if the assembly element (28) is screwed to the belt pulley (49) by the securing screw (47).

10. The power tool according to claim 9, **characterised in that** the form-fit geometry (52, 53) has a rib (52) provided on the belt pulley (49) and locking grooves (53) provided on the assembly element (48), wherein the rib (52) is interlockable into one of the locking grooves (53) when the eccentric cam (50) is unworn and/or when the assembly element (48) is sufficiently tensioned.

11. The power tool according to any one of claims 7 to 10, **characterised in that** the assembly element (48) is rotatable about the tool axle (15) by means of a hexagonal moulding (36) with a tool (32) whereby the securing screw (47) is arranged in such a way relative to the hexagonal moulding (36) that the tool (32) cannot be brought into effective contact with the hexagonal moulding (36) if the securing screw (47) is arranged in a manner screwing the assembly element (48) to the belt pulley (49).

12. The power tool according to any one of claims 7 to 10, **characterised in that** one marking arrow (54) is arranged on the belt pulley (49) and one marking arrow (55) on the assembly element (48), wherein by turning the assembly element (48) about the tool axle (15) the marking arrows (54, 55) are movable towards each other, whereby, in particular, an optimal tensioning of the assembly element (48) in the belt pulley (49) is achieved when the marking arrows (54, 55) point to each other.

13. A belt pulley (14, 16) of a belt drive (11) for a power tool, wherein the belt drive (11) has a drive-side belt pulley (14) rotating in a drive axle (13) and a tool-side belt pulley (16) rotating in a tool axle (15), wherein the belt pulley (14, 16) has an elongated hole (21) through which an axle (13, 15) is passable on which the belt pulley (14, 16) is mountable and can movable the elongated hole (21) on the axle (13, 15) between eccentric and a concentric arrangement, **characterised in that** the belt pulley (14, 16) comprises an assembly element (18, 48) which can be mounted rotatably about the tool axle (15) and has an eccentric cam (20, 50) by means of which the belt pulley (14, 16, 49) between the eccentric and the concentric arrangement is movable by turning the assembly element (18, 48) about the tool axle (15).

14. A method of assembling a belt (17) of a belt drive (11) between a motor (10) and a tool (12) of a power tool (100) wherein the belt drive (11) has a drive-side belt pulley (14) rotating in a drive axle (13) and a tool-side belt pulley (16, 49) rotating in a tool axle (15), wherein the method comprises at least the following steps:
- moving at least one of the belt pulleys (14, 16, 49) from a concentric arrangement with the holding axle (13, 15) on which the belt pulley (14, 16, 49) is held, into an eccentric arrangement, fitting of the belt (17) on the belt pulleys (14, 16, 49).
- returning the belt pulley (14, 16, 49) into the arrangement concentric with the axle (13, 15), whereby the belts (17) is pre-tensioned for which
- an assembly element (18, 48) having an eccentric cam (20, 50) is held rotatably around the axle (13, 15), wherein the assembly element (18, 48) is turned about the axle (13, 15) so that the belt pulley (14, 16, 49) is moved by the eccentric cam (20, 50) into the concentric arrangement with the axle (13, 15).

15. The method according to claim 14, **characterised in that** the belt pulley (14, 16, 49) has an elongated hole (21, 58) through which the axle (13, 15) extends and so that the belt pulley (14, 16, 49) is moved between the eccentric arrangement and the concentric arrangement by displacing of the axle (13, 15) in the elongated hole (21, 58) in a belt tensioning direction when the assembly element (18, 48) is turned about the axle (13, 15), whereby means are preferably used whereby the belt pulley (14, 16, 49) is blocked around the axle (13, 15) so that the assembly element (18) is turned about the axle (13, 15) and relative to the belt pulley (14, 16, 49).

16. The method according to claim 14 or 15, **characterised in that** a securing screw (47) is provided with which the assembly element (48) is screwed to the belt pulley (49), wherein the securing screw (47) is screwed in when the assembly element (48) is brought into the envisaged tensioning position and the belt pulley (49) is brought into the arrangement concentric with the axle (13, 15).

## Revendications

1. Appareil de travail motorisé (100) avec un moteur (10) et avec un outil (12) entraîné par le moteur (10) au moyen d'une transmission à courroie (11) dans lequel la transmission à courroie (11) comporte une poulie pour courroie (14) du côté de l'entraînement en rotation dans un axe d'entraînement (13) et une poulie pour courroie (16, 49) du côté de l'outil en rotation dans un axe d'outil (15) et dans lequel une courroie (17) peut être tendue au moyen des poulies pour courroie (14, 16, 49), **caractérisé en ce qu'**au moins une des poulies pour courroie (16, 49) peut être placée dans un montage excentrique depuis son axe (13, 15) récepteur et **en ce qu'**un élément de montage (18, 48) est prévu qui est logé pouvant être mis en rotation autour de l'axe d'outil (15) et qui comporte un excentrique (20, 50) au moyen duquel la poulie pour courroie (14, 16, 49) peut être ramenée dans le montage concentrique avec l'axe (13, 15) en mettant en rotation l'élément de montage (18, 48) autour de l'axe d'outil (15) et en appliquant une tension préalable dans les courroies (17).

2. Appareil de travail motorisé selon la revendication 1, **caractérisé en ce qu'** une console (19) est prévue et sur laquelle l'outil (12) est disposé monté pouvant être mis en rotation dans l'axe d'outil (15), dans lequel prédomine un espace figé entre l'axe d'entraînement (13) et l'axe d'outil (15) grâce à la console (19), dans lequel en particulier la poulie pour courroie (16, 49) qui peut être mise dans un montage excentrique depuis son axe (15), est formée par la poulie pour courroie (16, 49) du côté de l'outil.

3. Appareil de travail motorisé selon l'une quelconque des revendications 1 ou 2, **caractérisé en ce que** la poulie pour courroie (16, 49) comporte un trou oblong (21, 56) à travers lequel s'étend l'axe d'outil (15) et de sorte que la poulie pour courroie (16, 49) peut être mobile dans une direction de tension de courroie entre le montage excentrique et le montage concentrique en déplaçant l'axe d'outil (15) dans le trou oblong (21, 58), la poulie pour courroie (16, 49) comportant une surface de pression (22, 57) contre laquelle l'excentrique (20, 50) peut être mis en appui.

4. Appareil de travail motorisé selon l'une quelconque des revendications 1 à 3, **caractérisé en ce que** des moyens sont prévus par lesquels la poulie pour courroie (16) peut être bloquée en rotation autour de l'axe d'outil (15) de sorte qu'une rotation de l'élément de montage (18, 48) autour de l'axe d'outil (15) est rendue possible par rapport à la poulie pour courroie (16), les moyens étant formés de préférence par un trou (23, 59) dans la poulie pour courroie (16, 49) et un trou oblong (24) dans la console (19), un boulon (25) pouvant être passé à travers le trou (23, 59) et travers le trou oblong (24).

5. Appareil de travail motorisé selon l'une quelconque des revendications précédentes, **caractérisé en ce que** le trou oblong (24) est exécuté droit dans la console (19) ou comme rainure en arc avec une courbure, un élément de blocage (26) pouvant être en particulier inséré avec l'axe d'outil (15) dans le trou oblong (21) après recul de la poulie pour courroie (16, 49) dans le montage concentrique, pour fixer la poulie pour courroie (16, 49) dans le montage concentrique à l'axe d'outil (15).

6. Appareil de travail motorisé selon l'une quelconque des revendications précédentes, **caractérisé en ce qu'**un jonc d'arrêt (27) est prévu qui peut être posé sur un corps axial (28) de l'axe d'outil (15) lors du montage concentrique de la poulie pour courroie (16, 49) sur l'axe d'outil (15) et peut être placé dans un creux (29) aménagé dans la poulie pour courroie (16, 49).

7. Appareil de travail motorisé selon l'une quelconque des revendications précédentes, **caractérisé en ce qu'**une vis de fixation (47) est prévue avec laquelle l'élément de montage (48) peut être assemblé par vissage à la poulie pour courroie (49).

8. Appareil de travail motorisé selon la revendication 7, **caractérisé en ce que** l'élément de montage (18) comporte un trou oblong (56) pour passer à travers la vis de fixation (47) qui est dimensionnée de telle sorte que la vis de fixation (47) peut être passée ensuite à travers le trou oblong (56), lorsque l'excentrique (50) n'est pas usé et/ou lorsque l'élément de montage (48) est suffisamment tendu, un alésage fileté (51) étant aménagé de préférence dans la poulie pour courroie (49) dans lequel la vis de fixation (47) peut être vissée.

9. Appareil de travail motorisé selon la revendication 7 ou 8, **caractérisé en ce que** l'élément de montage (48) et la poulie pour courroie (49) présentent respectivement une géométrie en complémentarité de forme (52, 53), lesquels peuvent être mis l'un dans l'autre par complémentarité de forme et au moyen de laquelle on évite une rotation de l'élément de montage (48) dans la poulie pour courroie (49), en particulier lorsque l'élément de montage (48) est assemblé par vissage avec la poulie pour courroie (49) par la vis de fixation (47).

10. Appareil de travail motorisé la revendication 9, **caractérisé en ce que** la géométrie en complémentarité de forme (52, 53) présente une nervure (52) prévue sur la poulie pour courroie (49) et des rainures à cran (53) prévues sur l'élément de montage (48), la nervure (52) pouvant être enclenchée dans une des rainures à cran (53) lorsque l'excentrique (50) n'est pas usé et/ou lorsque l'élément de montage (48) est suffisamment tendu.

11. Appareil de travail motorisé selon l'une quelconque des revendications 7 à 10, **caractérisé en ce que** l'élément de montage (48) peut être mis en rotation avec un outil (32) autour de l'axe d'outil (15) au moyen d'une formation hexagonale (36), la vis de fixation (47) étant disposée par rapport à la formation hexagonale (36) de stelle sorte que l'outil (32) ne peut pas être mis en liaison active avec la formation hexagonale (36), lorsque la vis de fixation (47) est disposée de manière à ce qu'elle visse l'élément de montage (48) à la poulie pour courroie (49).

12. Appareil de travail motorisé selon l'une quelconque des revendications 7 à 10, **caractérisé en ce qu'**une flèche de repérage (54) est disposée sur la poulie pour courroie (49) et une flèche de repérage (55) est disposée sur l'élément de montage (48), les flèches de repérage (54, 55) pouvant être déplacées l'une sur l'autre autour de l'axe d'outil (15) en mettant en rotation l'élément de montage (48), une tension optimale de l'élément de montage (48) étant obtenue en particulier par la suite dans la poulie pour courroie (49), lorsque les flèches de repérage (54, 55) sont tournées l'une envers l'autre.

13. Poulie pour courroie (14, 16) d'une transmission à courroie (11) pour un appareil de travail motorisé, la transmission par courroie (11) comportant une poulie pour courroie (14) du côté de l'entraînement en rotation dans un axe d'entraînement (13) et une poulie pour courroie (16) du côté de l'outil en rotation dans un axe d'outil (15), la poulie pour courroie (14, 16) comportant un trou oblong (21) à travers lequel un axe (13, 15) peut être passé sur lequel la poulie pour courroie (14, 16) peut être reçue et peut être déplacée le long du trou oblong (21) sur l'axe (13, 15) entre un montage excentrique et un montage concentrique, **caractérisé en ce que** la poulie pour courroie (14, 16) comprend un élément de montage (18, 48) qui peut être reçu en rotation autour de l'axe d'outil (15) et qui comporte un excentrique (20, 50) au moyen duquel la poulie pour courroie (14, 16, 49) peut être déplacée par rotation de l'élément de montage (18, 48) autour de l'axe d'outil (15) entre le montage excentrique et le montage concentrique.

14. Procécé de montage d'une courroie (17) d'une transmission à courroie (11) entre un moteur (10) et un outil (12) d'un appareil de travail motorisé (100), la transmission par courroie (11) comprenant une poulie pour courroie (14) du côté de l'entraînement en rotation dans un axe d'entraînement (13) et une poulie pour courroie (16, 49) du côté de l'outil en rotation dans un axe d'outil (15), le procédé comprenant les étapes suivantes:
- transfert d'au moins une des poulies pour courroie (14, 16, 49) d'un montage concentrique avec l'axe récepteur (13, 15) sur lequel la poulie pour courroie (14, 16, 49) est logée, dans un montage excentrique, positionnement de la courroie (17) sur les poulies pour courroie (14, 16, 49),
- recul de la poulie pour courroie (14, 16, 49) dans le montage concentrique avec l'axe (13, 15), une tension préalable étant de ce fait établie dans les courroies (17), pour laquelle
- un élément de montage (18, 48) est logé pouvant être mis en rotation autour de l'axe (13, 15), lequel comporte un excentrique (20, 50), l'élément de montage (18, 48) étant mis en rotation autour de l'axe (13, 15) de sorte que la poulie pour courroie (14, 16, 49) est transférée par l'excentrique (20, 50) dans le montage concentrique avec l'axe (13, 15).

15. Procédé selon la revendication 14, **caractérisé en ce que** la poulie pour courroie (14, 16, 49) comporte un trou oblong (21, 58) à travers lequel s'étend l'axe (13, 15) et de sorte que la poulie pour courroie (14, 16, 49) est déplacée entre le montage excentrique et le montage concentrique en déplaçant l'axe (13, 15) dans le trou oblong (21, 58) dans une direction de tension de courroie, lorsque l'élément de montage (18, 48) est mis en rotation autour de l'axe (13, 15), des moyens étant de préférence utilisés par lesquels la poulie pour courroie (14, 16, 49) est bloquée autour de l'axe (13, 15) de sorte que l'élément de montage (18) est mis en rotation autour de l'axe (13, 15) et par rapport à la poulie pour courroie (14, 16, 49).

16. Procédé selon la revendication 14 ou 15, **caractérisé en ce qu'**une vis de fixation (47) est fournie avec laquelle l'élément de montage (48) est vissé à la poulie pour courroie (49), la vis de fixation (47) étant ensuite vissée, lorsque l'élément de montage (48) est mis dans la position de tension prévue et la poulie pour courroie (49) est mise dans le montage concentrique avec l'axe (13, 15).
